# EUROPEAN PATENT SPECIFICATION

(11) **EP 0 622 528 B1**
(45) Date of publication and mention of the grant of the patent: **29.12.1997**
(21) Application number: 94106407.3
(22) Date of filing: 25.04.1994
(51) Int. Cl.: F01M 1/16, F01M 3/02, F16N 13/12, F04B 17/00

(54) **Method and system for lubricating an internal combustion engine**
Verfahren und Einrichtung zur Schmierung einer Brennkraftmaschine
Procédé et dispositif de lubrification d'un moteur à combustion interne

(30) Priority: 23.04.1993 JP 97509/93
(43) Date of publication of application: 02.11.1994
(73) Proprietor: YAMAHA HATSUDOKI KABUSHIKI KAISHA, Iwata-shi Shizuoka-ken, 438 (JP)
(72) Inventor: Moriya, Takao, c/o Yamaha Hatsudoki K.K., Iwata-shi, Shizuoka-ken 438 (JP); Suenari, Masaya, c/o Yamaha Hatsudoki K.K., Iwata-shi, Shizuoka-ken 438 (JP)
(74) Representative: Grünecker, Kinkeldey, Stockmair & Schwanhäusser Anwaltssozietät

(56) References cited:
- EP-A- 0 481 376
- DE-C- 731 629
- GB-A- 278 283
- GB-A- 2 107 800
- GB-A- 2 238 919
- US-A- 4 045 343
- US-A- 4 326 837
- US-A- 4 812 727
- US-A- 4 904 163

## Description

The present invention relates to a method of supplying lubricant to a machine, in particular an internal combustion engine comprising a stepper motor controlled lubricant pump as well as a system for supplying lubricant to a machine, in particular lubricating system for an internal combustion engine comprising a lubricant supply unit having a lubricant pump, in particular for performing the method of supplying lubricant to a machine.

The necessity for lubricating mechanism and machine having moving parts is well known. Various types of lubricating systems have been proposed including both closed systems in which the lubricant is recirculated and so-called open systems wheerein the lubricant is supplied to the mechanism and dissipated to the atmosphere during the mechanism operation. Although the latter type of system has the advantage of simplicity, the discharge of lubricant to the atmosphere can cause obvious problems.

Under the machines involved internal combustion engines are a specific example of mechanisms which require lubrication. Generally four-cycle engines are lubricated by closed systems while two-cycle engines, because of their very nature, are lubricated by open systems. Although it was previously the practice to lubricate a two-cycle engine by mixing lubricant with the fuel which it consumed, these lubrication methods are not at all satisfactory because they provide the same amount of lubricant under widely varying running conditions while the actual engine requirements are different. In addition, they tend to provide excess lubricant so that the most severe conditions will be met and thus there is a large amount of lubricant consumed and discharged to the atmosphere.

Systems have been proposed for providing direct delivery of lubricant to the engine and the measuring of the amount of lubricant required and supplying only that amount of lubricant required for a given running condition.
Conventionally these systems have employed lubricant pumps that are driven by the engine with the amount of lubricant varied by either changing the delivery intervals for the lubricant or by changing the amount of lubricant pumped by the pump during each cycle. Although these systems offer more accurate control of the amount of lubricant than when it is mixed with the fuel, they still have some disadvantages.

For example, if the delivery interval is changed in order to control the amount of lubricant delivered to the engine, the effect ofinternal leakage within the pump itself cannot be ignored. That is, the amount of lubricant actually pumped is not that which is the teoretical capacity of the pump. For example, with a piston-type pump, the piston displaces a certain volume of fluid during each pumping cycle but the volume of fluid that is actually delivered is not equalled to the displacement volume of the piston during its stroke due to internal leakage. Of course, the amount of leakage will vary with the pump operation and thus it is somewhat difficult to ensure accurate amount of lubricant delivery with this type of system. These problems are particularly acute when the system is providing lubricant for a fairly long delivery period since the amount of internal leakage will obviously increase and hence the actual amount of oil supplied decreases as does the accuracy of the oil supply.

If the pump stroke is varied in response to engine conditions, then a complicated feedback system is required and the mechanism for controlling the amount of lubricant delivered per stroke of the pump becomes complicated and costly.

Such a method and system as indicated above are known from document DE-C-731629. This document refers to the drive of a lubricating pump means providing a stepping pump drive system, wherein the pump plunger is moved up and down via a stepping system from a solenoid. A similar technology is applied by two magnetic coils with a switching wheel having some similarity to a stepping motor.

The method and system as disclosed in this document have the same drawbacks or disadvantages, respectively, as mentioned above.

In addition, due to its design and the large number of movable parts, the system according to this document is not able to reliably control the lubricant amount required by the machine or internal combustion engine, respectively, and is moreover not capable of always accurately controlling this required amount of lubricant. In addition, the adjusting mechanism is only dependent on the engine speed because this adjusting mechanism receives current pulses in response to the engine revolution speed. However, the engine revolution speed is not sufficient for an accurate control of the lubricant amount.

Therefore, it is still a principle objective of the present invention to provide an improved method and apparatus for correctly controlling the supply of lubricant to a machine such as, for example, the supply of lubricant to an internal combustion engine, such as a two-stroke cycle engine.

It is still a further objective of the present invention to provide an improved system for supplying a lubricant to a machine such as, for example, lubricant delivery system for an internal combustion engine, wherein the amount of lubricant delivery can be accurately controlled and internal pumping losses are minimized.

It is finally an objective of the present invention to provide an improved stepper motor having reduced power consumption and a reduced heat generation.

The objective with respect to the method for supplying lubricant to a machine as indicated in the preamble of claim 1 is solved in that the lubricant pump is operable through a fixed range of movement for delivering a fixed amount of lubricant only upon movement through said fixed range by said stepper motor in incremental steps of movement, each less than said fixed range, said lubricant pump comprising a rotor magnetized in multiple poles and the stator with multiple phase windings controlling the rotation of the rotor by alternate one-and two-phases excitation and tow of the winding are simultaneously excited in a two-phase excitation, said method comprising the steps of sensing at least one machine running condition, determining the consumption of lubricant by said machine from the output of said sensor and operating said stepper motor to effect separate movement of said stepper motor upon a predetermined amount of lubricant consumption.

The pump is operable through a fixed range of movement for delivering a fixed amount of lubricant, only upon movement through the fixed range. The drive through the stepping motor is provided for driving the pump in incremental steps of movement each less than the fixed range of the pump. Aside of the sensor for sensing at least one maching running condition there is a lubricant consumption determinator that determines the consumption of lubricant by the machine from the output of the sensor. Operating means operate the stepping motor to effect a step of movement of the drive upon a predetermined amount of lubricant consumption .

According to a preferred development of the method according to the present invention a drive pulse period according to a target rotation speed of the rotor is obtained and the drive pulse period for power supply control is controlled in three divisions, namely, consisting of a one-phase excitation period, a two-phase excitation period and a one-phase exitation holding period, controlling the power supply for the one-phase excitation holding period to either zero or a value lower than that of an excitation drive.

Preferrably, the one-phase excitation holding period is controlled to a minimum value required for holding a valve member of the lubrication pump to a specified angular position means of said stepper motor.

According to another preferred embodiment of the method according to the present invention, an excitation period of the stator windings is controlled variably such that the higher the power source voltage, the shorter the length of the one- and two-phases excitation drive period.

According to yet another preferred embodiment of the method according to the present invention only a one-phase excitation and one-phase excitation holding is performed under conditions when the power source voltage exceeds a predetermined threshold voltage, while, simultaneously, the higher the power source voltage, the shorter is controlled the one-phase excitation drive period. Moreover, preferrably, under conditions when the power source voltage is below said predetermined threshold voltage, the one- and two-phase excitation drive and the one-phase excitation holding is performed while simultaneously the two-phase excitation drive period is controlled to be longer, the lower the power source voltage is.

In compliance with the present invention, the liquid supply pump is operable during a fixed range through a suction cycle, a dwell cycle and a delivery cycle.

Other preferred embodiments of the method according to the present invention are laid down in the further subclaims.

Further, the objective of the present invention with respect to a system for supplying lubricant to a machine as indicated in the preamble of claim 15 is solved in that the lubricant pump comprises a rotatable valve body which is operated by a stepper motor in a step-wise manner by a predetermined angle of rotation every time the stepper motor receives a drive pulse signal from a control unit, comprising a liquid amount calculating means and a liquid delivery period calculating means in response to the engine operating conditions for obtaining an amount of liquid per unit time commensurate with instant machine operating conditions and for obtaining a liquid consumption time for 1/n of the delivery amount per one delivery stroke from the lubricant pump, based on the liquid amount required per unit time and obtaining the delivery period of the lubricant pump by totaling the consumption time for n-times.

According to a preferred layout of such a system for lubricating a machine, such as an engine, same comprises a pump operated through a fixed range of movement for delivering a fixed amount of lubricant, only upon movement through said fixed range, a drive for driving said pump in incremental steps for movement each less than said fixed range, a sensor for sensing at least one machine running condition, in particular engine running condition, a lubricant consumption determiner, for determining the consumption of lubricant, by said machine, from the output of said sensor and an operator for operating said drive unit to effect a step of movement of the drive upon a predetermined amount of lubricant consumption.

Preferrably, the drive is a stepper motor.

It has been determined in accordance with this invention that the amount of liquid supplied to a machine, specifically of lubricant supplied to an engine, can be more accurately controlled if the liquid supply, specifically a lubricant supply, incorporates a pumping device that pumps a finite amount of liquid, such as lubricant during a single cycle of its operation. Such a liquid pump, in particular lubricant pump, is then driven by a drive, particularly a stepper motor, that is operated incrementally with the increments being chosen to satisfy the instantaneous liquid requirements of the machine, in particular lubricant requirements of an engine. Once the requisit number of increments have been met, then the liquid pump, in particular lubricant pump, will deliver a finite amount of liquid, such as lubricant. With such an arrangement the internal leakage of the pump will be constant under all conditions and hence this internal leakage will not adversely affect the accuracy of the liquid amount supplied, specifically the supply of lubricant.

With such a type of liquid supply system, in particular lubricant supply system, the use of complicated feed back controls can be avoided.

As it is, moreover, desirable to ensure that the actual position of the pump during its cycle of operation is accurately monitored so as to avoid possible errors. According to a preferred embodiment of the invention, moreover, means for monitoring the condition of the pump and altering its operating in the event of discrepancies are encountered, are provided.

According to a preferred embodiment of the present invention the drive of the pump is formed by an electrical stepper motor. As the output of such stepper motors, however, can vary in response to the electrical pump power supplied to it such a stepping motor needs to be operated so as to provide equal increments of movement regardless of the voltage available to drive the stepping motor.

Moreover, in conjunction with stepper motors it is obvious that it desirable to reduce the amount of power consumed, so as to reduce the possible discrepancies in pump output or pump conditions due to variations in voltage. Accordingly, the stepping motor used in this system should have a reduced power consumption.

With the use of such stepping motors conditions may occur that the motor will become heated and this can effect the operation of the motor and also the amount of liquid such as lubricants supplied by the pump that is driven by such a stepping motor. Therefore, the drive of the stepping motor should ensure that the temperature is maintained at a low level. As low power-consumption and low temperatures are particularly important for using stepper motors, in conventional application for stepper motors, the stepper motor does not operate over long time intervals but rather only operates to achieve small adjustments under most circumstances. Thus, stepper motor used as an preferred embodiment of the drive unit of the liquid supply pump, in particular lubricant supply pump, is driven much more fequently than with conventional operations and the maintainence of low power-consumptions and low temperatures are particularly important.

Accordingly, according to a preferred embodiment of the present invention the stepper motor used as a drive means of a the pump comprises first and second stator windings and the stepping motor is operated so as to effect its operation by energising either one or both of the windings depending upon certain conditions. More particularly, for driving the stepper motor according to a preferred embodiment of the method of supplying liquid such as lubricant to a machine, such as an engine, the rotation of the rotor of the stepping motor is controlled by alternate one- and two phases excitation in which either one of the windings is excited in a one-phase excitation and two of the windings are simultaneously excited in a two-phase excitation, wherein a drive pulse period according to a target rotation speed of the rotor is obtained and that the drive pulse period for power supply control is controlled in three divisions consisting of a one-phase excitation period, a two-phase excitation period and a one-phase excitation holding period controlling the power supply for the one-phase excitation holding period to either zero or a value lower than of an excitation drive period.

Another aspect of the present invention comprises the liquid pump, preferrably lubricant pump, which is such the type that supplies a fixed amount of liquid (preferrably a lubricant) during a fixed range of movement of the pump element. The pump element is driven in increments and the fixed range of movement is accomplished with a predetermined number of increments. A sensor is provided for determining whether the pump element is in a position indicative of the final position of the fixed range and the output of this sensor is compared with a number increments driven to determine if there is a descrepancy in the position of the pump element from the desired position.

Further preferred embodiments of the present invention are let down in the further subclaims.

In the following the present invention is explained in greater detail by means of several embodiments thereof in conjunction with the accompanying drawings wherein:

Figure 1 is a side elevational view, with portion broken away and other portions shown schematically of an engine having a lubricating system constructed in accordance with an embodiment of the invention.

Figure 2 is an enlarged cross-sectional view taken through the lubricant pump and distribution device.

Figure 3 is a cross-sectional view of the lubricant pump and distribution device taken along a plane perpendicular to the plane of Figure 2.

Figure 4 is a bottom plan view of the lubricant pump and distribution device.

Figure 5 is a cross-sectional view taken along the line 5-5 of Figure 2.

Figure 6 is a partial cross-sectional view of another portion of the lubricant pump and distribution device.

Figure 7 is a developed view showing the drive cam operation of the lubricant pump.

Figure 8 is a block diagram showing the components of the lubricant control and related sensors.

Figure 9 is a graphical view showing the ignition pulses, lubricant pump driving pulses and lubricant delivery cycles in relation to time.

Figure 10 is a three-dimensional map showing how the pump drive pulse driving interval is determined in relation to lubricant consumption at various engine speeds and throttle openings or loads.

Figure 11 is a block diagram showing the control routine for determining the requisite amount of lubricant and the pump driving time interval.

Figure 12 is a block diagram of a control routine showing how the driving pulses are sent to the lubricant pump in response to the selected time interval.

Figure 13 is a block diagram showing the corrective action that is taken when the lubricant pump is determined to be out of phase.

Figure 14 is a graphical view in relation to time of engine speed, ignition pulses or spark plug firing, lubricant pump driving pulses and lubricant delivery during an engine slow-down cycle.

Figure 15 is a block diagram showing the method of determining the pulse width in response to the engine operational speed in accordance with the embodiment of the invention.

Figure 16 is a graphical view showing the compensation of the drive pulse timing in relation to engine temperature.

Figure 17 is a graphical view showing the pulse timing compensation in relation to battery voltage.

Figure 18 is a cross-sectional view, in part similar to Figure 2, of a lubricant pump constructed in accordance with another embodiment of the invention.

Figure 19 is a cross-sectional view, in part similar to Figure 3, showing the lubricant pump in accordance with the embodiment of Figure 18.

Figure 20 is a bottom plan view of the lubricant pump of this embodiment.

Figure 21 is a cross-sectional view taken along the line 21-21 of Figure 18.

Figure 22 is a view showing one type of stepper motor that can be employed in conjunction with the invention for driving the lubricant pump.

Figure 23 is a block diagram, in part similar to Figure 8 and shows another embodiment of the invention.

Figure 24 is a developed view showing the stator windings and rotor of the pulsar motor of this embodiment.

Figure 25 is a graphical view showing the energization pulses for the various stator windings during a phase of engine operation and shows how the output can be compensated for battery voltage.

Figure 26 is a graphical view showing the pulse duration required at various voltage levels with the various control strategies possible with this embodiment.

Figure 27 is a developed view, in part similar to Figure 24, and shows how the rotor rotates relative to the stator during the various energization and holding cycles.

Figure 28 is a block diagram snowing the control routine in accordance with this embodiment of the invention.

Figure 29 is a block diagram of a routine showing how the drive pulses and holding pulse are calculated.

Figure 30 is a block diagram showing how the driving pulses and holding pulses are converted into timers signals.

Figure 31 is a developed view, in part similar to Figure 7 and shows how the arrangement can be utilized in conjunction with a system wherein the driving pulses are shortened so that there is a dwell period when the pump plunger is in its ramp-condition.

### Detailed Description of the Preferred Embodiments of the Invention

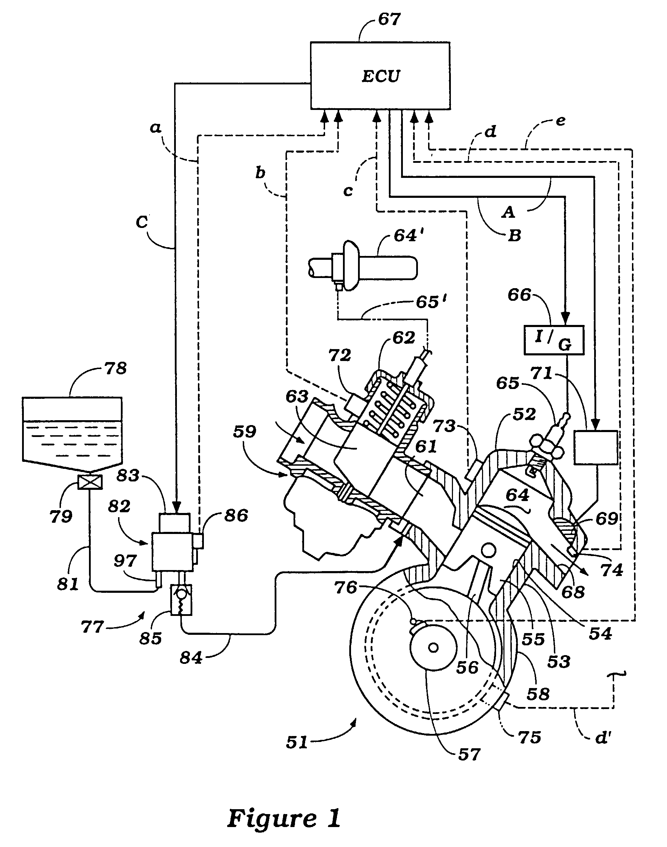

Referring now in detail to the drawings and initially to Figure 1, a reciprocating machine and specifically a two-cycle crankcase compression internal combustion engine lubricated in accordance with an embodiment of the invention is illustrated and is identified generally by the reference numeral 51. It is to be understood that the construction of the machine (engine) 51 is to be considered typical of the type of mechanism that can be lubricated in accordance with a system embodying the invention. The engine 51 as will be described may be considered to be conventional and for that reason only the details of the construction of the engine necessary to understand the construction and operation of the lubrication system will be described. Where any components are not described, they may be considered to be conventional. In a like manner, it will be obvious to those skilled in the art how the invention can be employed in conjunction with engines of types other than that illustrated and also with other types of machines.

The engine 51 is depicted through a cross section of a single cylinder because it will be readily apparent to those skilled in the art how the invention may be practiced with engines having multiple cylinders and other cylinder configurations. The engine 51 includes a cylinder block cylinder head assembly 52 having a cylinder block portion 53 that forms a cylinder bore 54. A piston 55 is supported for reciprocation within the cylinder bore 54 and is connected by means of a connecting rod 56 in a known manner to a crankshaft 57. The crankshaft 57 is rotatably journaled within a crankcase chamber formed by the cylinder block 53 and a crankcase 58 that is affixed thereto in a well known manner. As is typical with two-cycle crankcase compression engine practice, the crankcase chamber associated with each cylinder bore 54 (if a multiple cylinder engine is employed) is sealed from the others.

An intake charge is delivered to the crankcase chambers by an induction system, indicated generally by the reference numeral 59 and which includes an intake passage 61 formed in the cylinder block 53 and which communicates with the crankcase chamber through an intake port in a well known manner. A carburetor 62 is affixed to the cylinder block 53 and receives fuel from a fuel source (not shown) for forming a fuel air charge that is delivered to the crankcase chambers of the engine. The carburetor 62 in the illustrated embodiment is of the sliding piston throttle type and includes a piston type throttle valve 63 which is operated by a remote operator 64' through a bowden wire cable 65'. The type of throttle control and carburetor 62 illustrated is a type normally employed in motorcycles or motorscooters and the throttle 64' is a handlebar-type twist grip throttle as is well known in that art. Obviously, other types of charge forming systems and controls therefore may be employed.

The fuel-air charge formed by the carburetor 62 is drawn into the crankcase chambers when the piston 55 moves upwardly in the cylinder bore 54. As the piston 55 moves downwardly this charge will be compressed and then is transferred to a combustion chamber 64 formed by the head of the piston 55, the cylinder bore 54 and the cylinder head cylinder block assembly 52. A sparkplug 65 is mounted in the cylinder head portion of the cylinder head cylinder block 52 for firing this charge. The sparkplug 65 is fired by an ignition circuit 66 which is, in turn, controlled by an ECU 67 in a manner which will be described. The ECU 67 receives certain signals from the engine 51 and its auxiliaries and also ambient signals, if desired, and outputs control signals, as will also be descried later.

The burnt charge is discharged from the combustion chamber 64 through an exhaust passage 68 formed in the cylinder block 52 and which communicates with an exhaust manifold (not shown) -for silencing and discharge of the exhaust gases to the atmosphere.

An exhaust control valve 69 is positioned in the exhaust passage 68 and is controlled by a servomotor 71 so as to adjust the compression ratio of the engine in response to sensed parameters. The servomotor 71 is also controlled by the ECU 67. The control signals A and B from the ECU 67 control the exhaust control valve 71 and ignition circuit 66, respectively, by any known control strategy.

As has been noted, the ECU 67 receives certain signals indicative of engine condition and these may include an engine load signal b which is derived in the specific embodiment illustrated by a throttle position sensor 72 that cooperates with the throttle valve 63 of the carburetor 62 so as to output a signal indicative of the operator demand as determined by the position of the throttle valve 63. In addition, an engine temperature signal c is derived from an engine temperature sensor 73 that is mounted suitably on the engine, for example the cylinder block or cylinder head assembly 52. If the engine 51 is water cooled, this signal may be derived from a sensor In the cooling jacket of the engine.

An engine air flow signal d is provided in this embodiment by an exhaust pressure sensor 74 positioned in the exhaust passage 58. Alternatively, a crankcase pressure sensor 75 may output a crankcase pressure signal d' which will also be indicative of engine air flow.

A crankshaft position sensor 76 mounted on the crankcase 58 and cooperating with the crankshaft 57 in a known manner outputs a signal e which, when counted and divided by time will provide an indication of the rotational speed of the crankshaft 57. In addition to these sensors, various other sensors may be employed for the control of the ignition circuit 66 and the exhaust control valve 71 including ambient condition sensors. Again, this portion of the construction of the engine 51 may be considered to be conventional and, for that reason, further details of the control strategy for the various basic components of the engine is not believed necessary to understand and practice the invention.

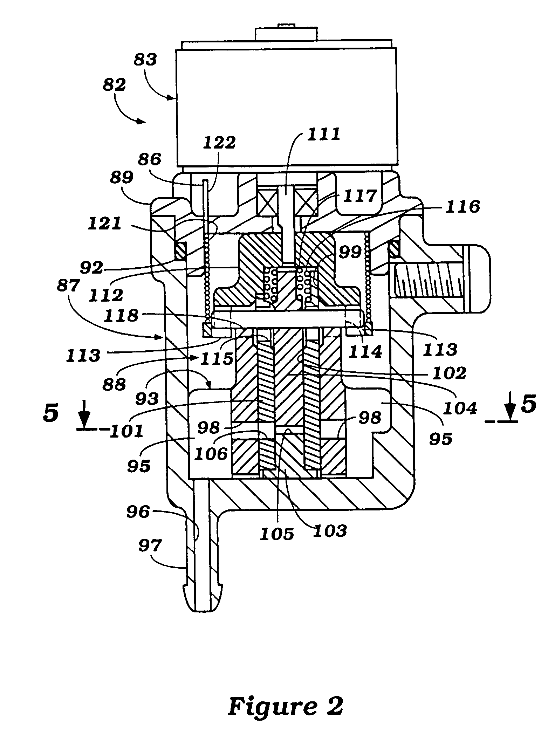

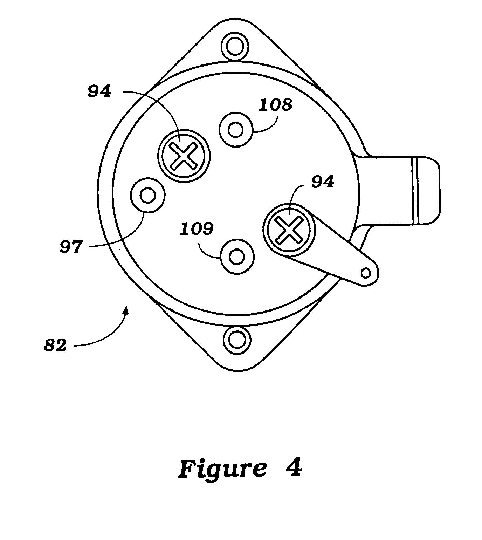

In accordance with the invention, the engine 51 is provided with a lubricating system, which is indicated generally by the reference numeral 77. This lubricating system 77 includes a lubricant tank 78 that is charged with lubricant and which supplies the lubricant through the filter 79 to a conduit 81 which, in turn, supplies this lubricant to a combined lubricant pump and distributor 82 having a construction which will be described in more detail by reference to Figures 2-6. This lubricant pump and distributor 82 is driven by a stepping motor, indicated by the reference numeral 83 and operates through a number of steps each of which effects less than the total stroke of the pump 82, as will be described. Once the requisite number of steps are completed, lubricant will be discharged in a finite quantity from the pump and distributor 82 to a supply conduit 84 in which a check valve 85 is positioned.

In this embodiment, the supply conduit 84 cooperates with a lubricant delivery port that is disposed in the cylinder block intake passage 61. It is to be understood that lubricant may be delivered to the engine 51 in other places than through its induction system 59 or in addition to that. For example, lubricant may be supplied directly to the piston 55 through the cylinder block 53 and directly to other components of the engine 51. The specific way in which the lubricant is actually introduced to the engine 51 is not a critical feature of the invention since the invention resides in the way in which the amount of lubricant supplies is measured and how it is delivered rather than where it is delivered to the engine 51.

The stepper motor 83 is controlled by a control signal C from the ECU 67. In addition, there is a position sensor 86 carried by the lubricant pump and distributor 82 for outputting a signal a when the pump 82 is in a predetermined position, as will become apparent.

The construction of the lubricating pump and distributor 82 will now be described by particular reference to Figures 2-6. It will be seen that the assembly includes a main outer housing piece 87 that defines an internal cavity 88 which is closed at its lower end by an integral wall and at its upper end by means of a cover piece 89. The cover piece 89 is affixed to the main body portion 87 by a plurality of threaded fasteners 91 and an o-ring seal 92 provides a seal for the upper end of the cavity 88.

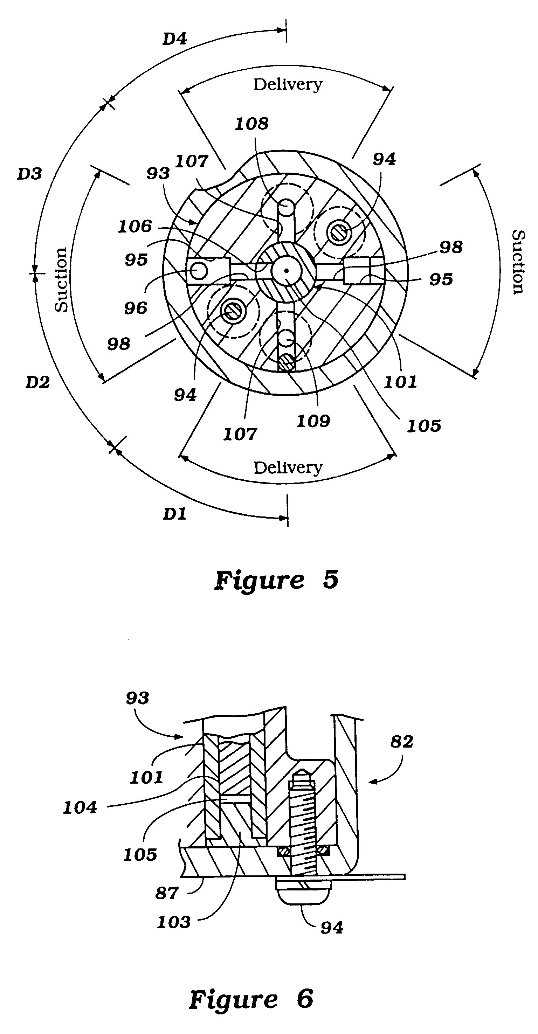

A combined cylinder support and cam forming member 93 is positioned in the lower end of the cavity 88 and is held in place by means of threaded fasteners 94 (Figure 6). This cylinder support and cam forming member 93 is provided with a pair of circumferentially spaced cutouts 95 one of which communicates with a flow passage 96 of a delivery inlet nipple 97 formed at the bottom of the housing piece 88 and which communicates with the conduit 81 for delivery of lubricant to the cavity 88 from the reservoir or tank 78. A cross drilled passageway 98 extends through the cylinder support and cam forming member 93 so as to introduce lubricant to the actual pumping device of the pump and distributor mechanism 82 in a manner which will be described.

The member 93 is provided with a cylindrical bore 99 in which a distributor sleeve and cylinder forming member 101 is supported for rotation. The sleeve 101 has an internal bore 102, the lower end of which is closed by means of a closure plug 103 which is stepped so as to provide a seal with the lower end of the sleeve 101. A pumping plunger 104 is slidably supported within the bore 102 and forms with the bore 102 and the closure plug 103 a pumping chamber 105. The sleeve 101 is formed with a distributor port 106 that is axially aligned with the cross bore 98 in the member 93 so as to selectively permit lubricant to flow from the cavity 88 into the pumping chamber 105 at the specific angular positions determined by the locations of the cross bore 98.

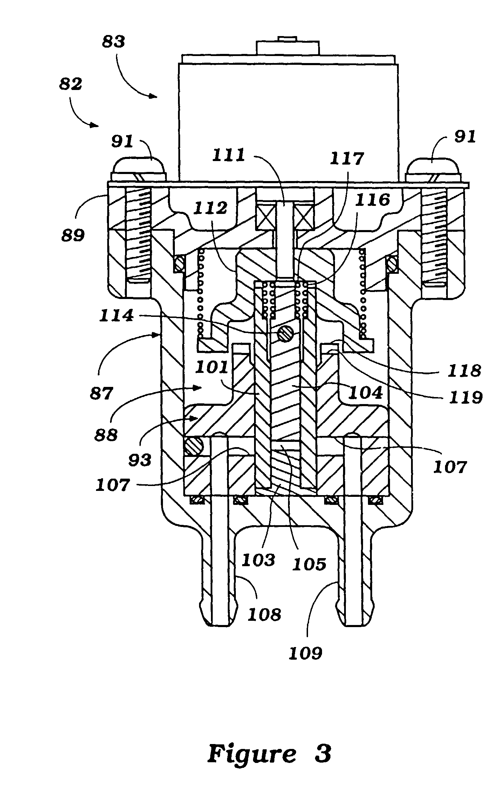

In the illustrated embodiment, the pump 82 provides two pumping cycles per rotation or one each 180° of rotation, as will become apparent. This is determined by the location of the cross bore 98 and a delivery cross bore 107 (Figure 3) formed in the housing-piece 93 which is spaced 180° from the cross bore 98. The delivery cross bore 107 is sequentially indexed with the sleeve timing port 106 so as to sequentially communicate fluid pressure to a pair of outlet nipples 108 and 109 formed in the lower end of the housing member 87. These outlet nipples 108 and 109 communicate with the check valve 85 or with a separate check valve for each nipple, depending upon whether the lubricant all is delivered at a common place to the engine or at spaced locations.

The stepper motor 83 has an output shaft 111 which is driven each time an electrical pulse is transmitted to the stepper motor 83 from the ECU 67 through a predetermined degree of angular rotation (45° in the illustrated embodiment). The speed of rotation will be determined by the width of the drive pulse applied to the stepper motor 83. If the drive pulse signal is wide then the speed of rotation will increase while if the width of the drive pulse is narrow, the speed will decrease.

A drive cup 112 is affixed by a keyed or splined connection to the stepper motor output shaft 111 and has a pair of opposed slots 113 that establishes a driving connection to a drive pin 114. The drive pin 114 extends through a bore formed in the upper end of the plunger 104 so as to provide a driving connection between the drive cup 112 and the pumping plunger 104. This driving connection causes the pumping plunger 104 to rotate as the drive cup 112 rotates but also permits axial movement of the pumping plunger 104 relative to the drive cup 112 and the cylinder sleeve 101. The cylinder sleeve 101 is also rotatably coupled to the drive pin 114 by a slot 115 as formed in the cylinder 101 for this purpose. The slot 115 has sufficient length, however, so as to permit reciprocation of the pin 114, in a manner to be described, without corresponding reciprocation of the distributor sleeve 101.

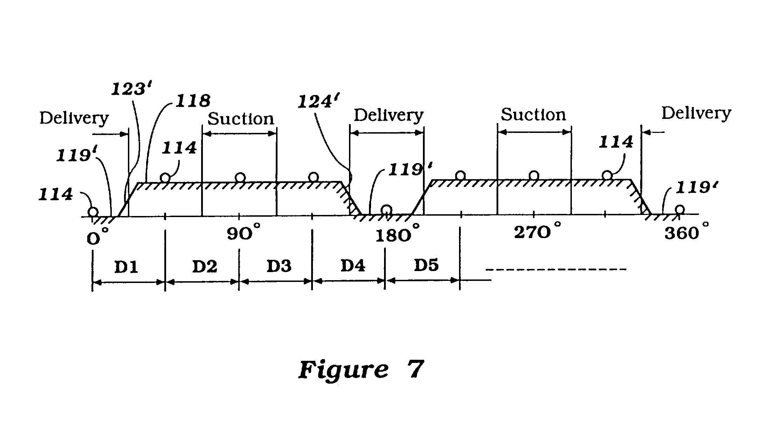

A first coil compression spring 116 engages the end of the drive cup 112 and the distributor sleeve 101 for urging the distributor sleeve 101 into sealing engagement with the end plug 103. A second coil compression spring 117 engages the drive cup 112 and the pump plunger 104 so as to urge the pump plunger 104 into engagement with a pair of drive cams 118 formed on the support and cam forming member 93. These drive cams 118 and their relationship with the drive pin 114 may be understood by the developed view of Figure 7. It will be seen that the drive cam 118 is provided with a pair of circumferentially spaced notches 119. When the drive pin 114 has been rotated to register with these notches 119 the pump plunger 104 will be driven downwardly by the spring 117 to reduce the volume in the pumping chamber 105 and pressurize the lubricant. On the other hand, when the rotation continues so as to cause the drive pin 114 to move upwardly into engagement with the upper cam surface 118, the pump plunger 104 will be urged upwardly compressing the spring 117 and increasing the volume of the pumping chamber 105. As will be discussed, this permits fluid to be drawn into and discharged under pressure from the pumping chamber 105.

The position sensor 86 which is illustrated schematically in Figure 1 is snown in more detail in Figures 2 and 3 and provides an output signal each time the drive pin 114 and pumping plunger 104 is at its extreme upward position and the end of the suction stroke of the pump 82. This sensor 86 includes a coil winding 121 that is connected to a terminal 122 so as to output the signal when the drive pin 114 is brought into registry with the winding or coil 121 at the upper portion of its stroke as shown in Figure 2. Hence, in the illustrated embodiment, there will be two such indications each complete revolution of the stepper motor 83 or one each 180° of rotation. As will become apparent, the number of steps of the stepper motor 83 necessary to achieve a pumping cycle can be varied.

A sequence of pumping operation of the pump 82 will now be described by particular reference to Figures 5 and 7. Actually, Figure 5 shows the condition after the drive cup 112 and stepper motor output shaft 111 have rotated through 90° from the start position, indicated at the beginning of the dimension D1. At the D1 position, the distributor port 106 of the distributor sleeve 101 will be in registry with the delivery cross bore or discharge passageway 107 that communicates with the discharge or outlet nipple 109 and lubricant will be delivered at this point. Actually, the lubricant delivery will have begun earlier as shown by the arrows in Figure 5 due to the fact that the distributor port 106 comes into registry with the passageway 107 before the D1 position. Upon the transmission of a driving impulse to the stepper motor 83, the stepper motor output shaft 111, drive cup 112 and drive pin 114 will be rotated through 45° to the termination of the D3 position. During this time, the drive pin 114 will engage an incline surface 123' at the side of the flat 118 and be driven upwardly to the upper cam surface 118 as shown at the D1 position in Figure 7. When this occurs, the distributor port 106 will be moved out of registry with the passages or passageways 98 and 107 but the plunger 104 will be moving upwardly to create a reduced pressure in the pumping chamber 105.

Upon the next impulse of driving force to the stepper motor 83 rotation through the dimension D2 will occur and at a position somewhat before the actual completion of the movement to the D2 position the distributor port 106 will come in registry with the passageway or cross drilling 98 and lubricant can flow from the chamber 88 into the pumping chamber 105 because of the reduced pressure occurring therein. Thus, the chamber 105 will be filled with liquid lubricant.

During the next impulse of driving through the range D3, the fluid will continue to fill the chamber 105 until the distributor port 106 is no longer in contact with the cross drilling 98 and the lubricant will remain in the chamber 105.

During the final drive cycle D4, the pin 114 will come in registry with a ramp 124, leading to the flat 119', and the coil spring 117 will urge the pumping plunger 104 downwardly, and fluid will be compressed. Upon continued movement through the step D4, the distributor passageway 106 will come into registry with the cross-drilling 107 at the beginning of the delivery phase, and lubricant will then be delivered out of the discharge nipple 108. Hence, it should be apparent that a finite amount of lubricant is pumped, the volume of the chamber 105 from maximum volume condition to minimum volume condition during each 180 degrees of rotation of the stepper motor output shaft 111. As previously noted, other timing intervals can be employed.

Because of the relatively small amount of liquid displaced during each pumping cycle, pumping losses due to internal leakage will be held constant for each pumping cycle, and thus no adjustments are required or compensation for the pumping losses, since they are known each cycle and do not differ from each other. Also, due to the fact that relatively small amounts of lubricant are delivered each cycle, the control is much more accurate than with previously described constructions.

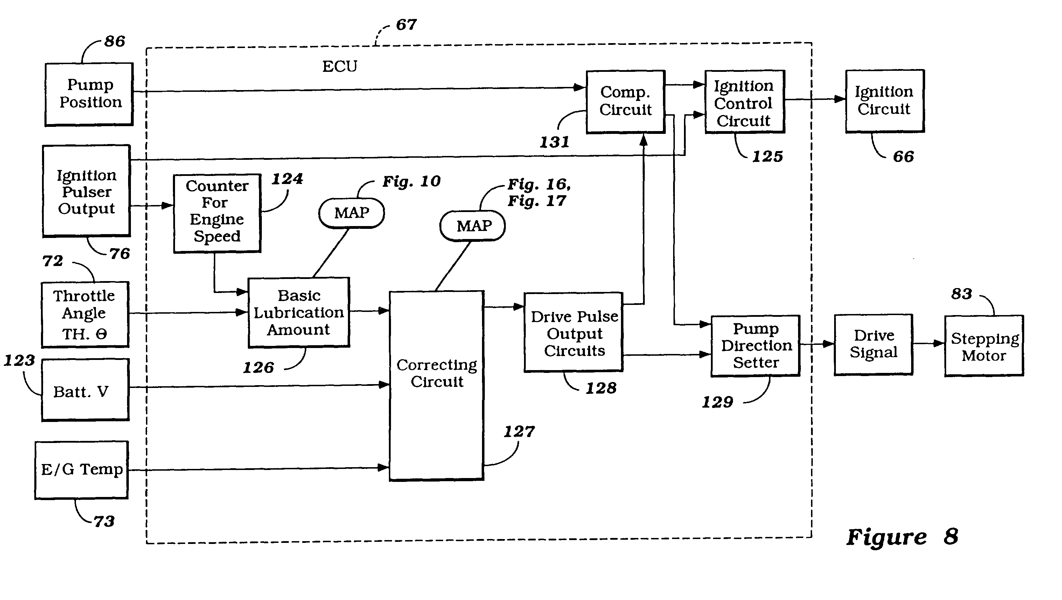

Having thus described the hardware of the system, the actual control strategy will be described now by reference to Figures 8-17 and initially to Figure 8, which shows the interrelationship of the components in block form. As has already been noted, the ECU 67 receives certain signals from the engine sensors, and some of these signals are also employed in the lubricant control, as seen in Figure 8. These include the position of the throttle valve 63, as determined by the throttle position sensor 72, and the output of the crankcase rotation sensor 76, which indicates each revolution of the engine 51. Engine temperature from the engine temperature sensor 73 is also supplied to the ECU 67 for lubricant control. In addition to these sensors, the output of the pump position sensor 86 and the voltage of the battery of the system, indicated by a battery voltage sensor 123, are input to the ECU 67.

The output from the pulsar coil 76 or crankcase position sensor is transmitted to an internal counter 124 of the ECU 67, which provides a number of counts of the pulse in a given time period so as to determine engine speed. It should be noted that in the particular lubrication system disclosed, the measured engine parameters are engine speed and engine load, as determined by throttle position from the throttle position sensor 72. Although these particular parameters are used, it will be readily apparent to those skilled in the art how other parameters can be employed.

In addition, the output from the crankshaft position sensor 76 is also transmitted to an ignition control circuit 125 of the ECU, so as to output the control to the ignition circuit 66 for its operation. As previously noted, this can be done in accordance with any desired strategy.

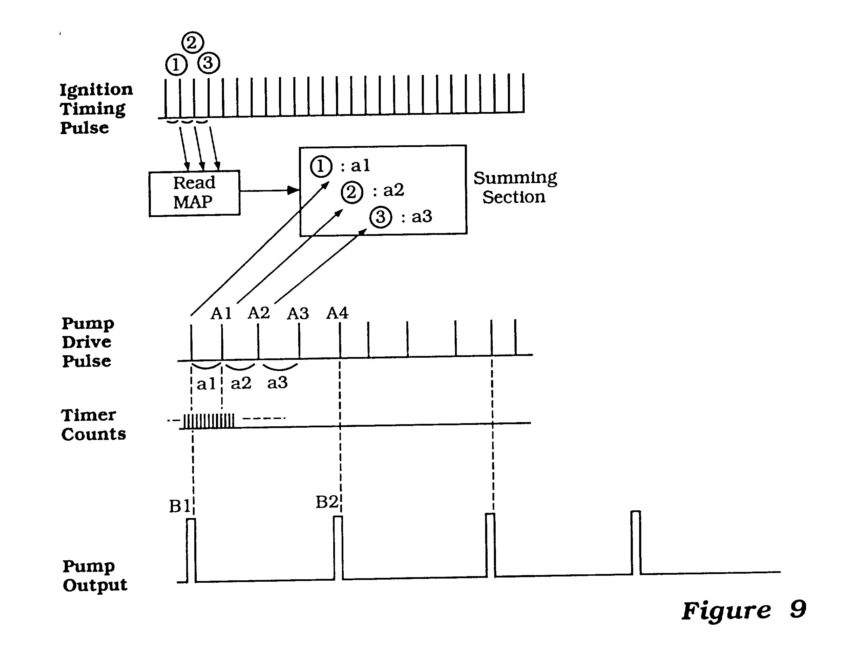

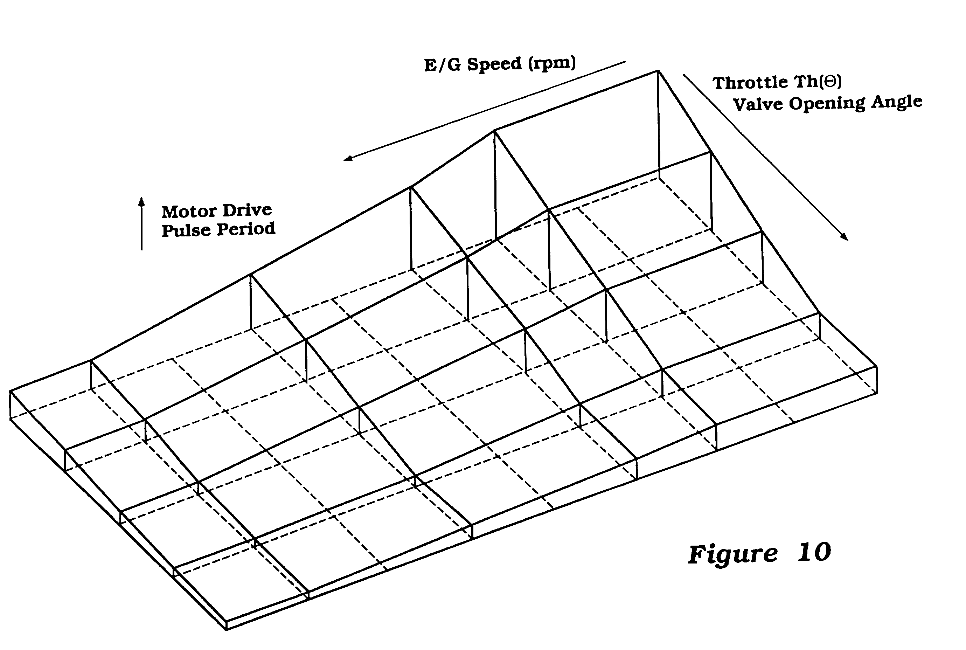

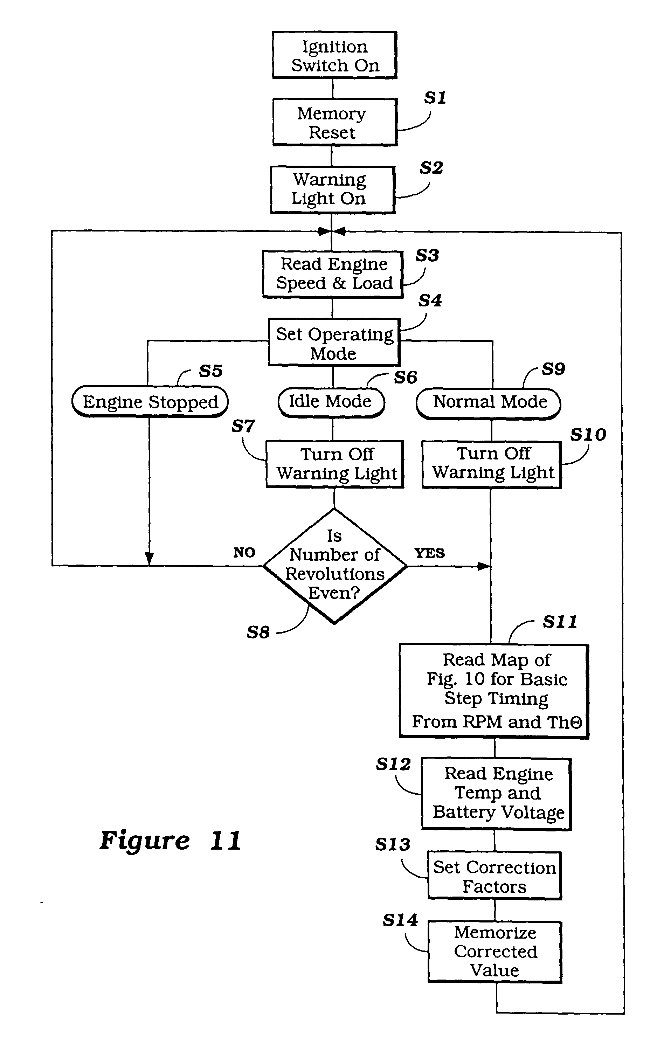

The output from the engine speed counter 124 and the output from the throttle angle sensor 72 are transmitted to a basic lubrication amount determining circuit 126 of the ECU 67, which determines the basic amount of lubricant required for the instantaneous engine running conditions, as determined by a three-dimensional map, as shown in Figure 10. As seen in Figure 9, each time the sensor or pulsar 76 outputs a pulse, there is a signal transmitted to the ECU 67, which causes it to read the map of Figure 10 and output this reading into a summing circuit, which will then determine a respective lubricant consumption value that are summed on each reading in a summing section, as shown in Figure 9. This then determines the drive pulse periods al when the actual pump driving pulses A1 are transmitted to the stepper motor 83. As has been previously described, each four driving pulses will cause a delivery output of the pump 82, as shown in Figure 9, with the delivery pulses being indicated at B1, B2, etc.

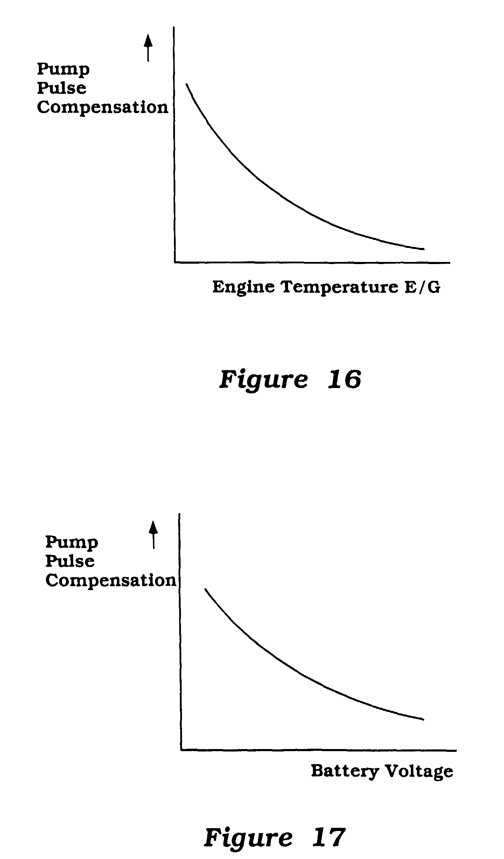

Again referring to Figure 8, the output signal from the basic lubrication amount determining circuit 126 is then output to a correcting circuit 127, which corrects the timing signal, dependent upon certain conditions; in this specific embodiment, the battery voltage determined by the sensor 123 and the engine temperature determined by the sensor 73. These adjustments, or compensation factors, are made in accordance with the maps of Figures 16 and 17, as will be seen. As the engine temperature increases, the drive pulse period is done more frequently so as to ensure adequate lubrication as the heat load increases. On the other hand, if battery voltage increases, the pump driving pulse can be shortened so as to alleviate load on the battery and reduce heat generated by the stepper motor 83. That is, the high battery voltage indicates that the system can operate at a minimum duration of driving pulse; whereas if the battery voltage is down, then a longer driving pulse is required.

Once the correction is made, the corrected signal is transmitted to a drive pulse output circuit 128 of the ECU 67, which outputs its drive signals to a pump direction setter, indicated generally by the reference numeral 129. As will be noted later in this description, if there is determined a lack of coincidence between the actual position of the pumping plunger 104 and the desired or expected position, then it is determined that there is some blockage in the system, and the direction of pump rotation is reversed. The signal is then output to a drive signal, which is in turn transmitted to the stepper motor 83 for its operation through a single drive step.

Still referring to Figure 8 and as has been noted, the system compares the actual position of the pump plunger 104 with the position that it should have assumed for the number of drive pulses generated. Thus, the output from the pump position sensor 36 and the output from the drive pulse output circuit 128 are delivered to a comparator circuit 131 of the ECU 67, which will compare the signals, as will be described later, so that when four drive signals have been generated, this will be compared with the actual position as determined by the pump position sensor 86; and if the desired position is not existent, then the corrective action will be initiated by the pump direction setter 129, which receives the output signal from the comparator circuit 131. In addition, if there is a discrepancy and this is not cured, then the engine speed will be reduced by the comparator 131, outputting an appropriate signal to the ignition control circuit 125 to reduce the speed of the engine 51 by skipping firings of the spark plugs 65 in any well-known manner.

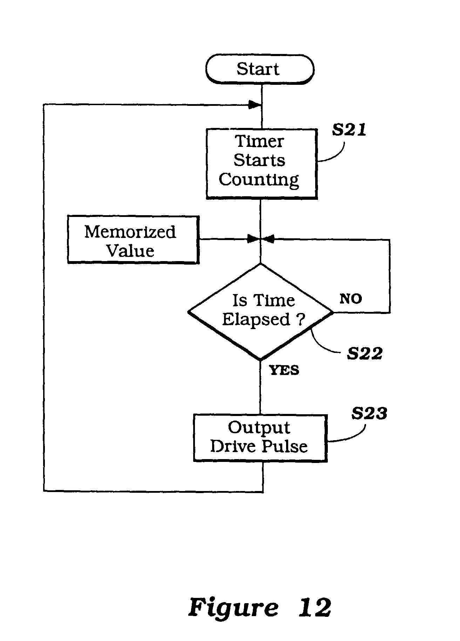

The actual control routine by which the lubrication stepping intervals are determined and initiated will now be described by initial reference to Figure 11, and subsequently to Figures 12-15. Figures 16 and 17 will again be referred to inasmuch as they show the compensation maps.

The program begins when the ignition switch is turned on, and then at the step S1, the memory is reset. In addition, at the step S2 a warning light is turned on so as to permit the operator to determine that the warning light system is operative.

The program then moves to the step S3, so as to read the condition of the engine speed from the output of the sensor 76 from the speed counter 124 of the ECU 67, and also throttle angle position from the throttle position sensor 72 at the step S3. The program then moves to the step S4 so as to determine the operating mode required based upon the engine speed and engine load or throttle opening, as were read at the step S3.

If at the step S4 it is determined that the engine 51 is not running because there is no output of engine speed, the program moves to the engine stop mode at step S5 and resets back to step S3.

If, however, at the step S4 it has been determined that the engine 51 is running and the engine speed is at idle speed, the program moves to the idle mode of step S6. The program then moves to the step S7 to turn off the warning light that was turned on at the step S2. Once the warning light is turned off at the step S7, the program then moves to the step S8 so as to determine the number of revolutions that the engine 51 has made from the outputs of the crankshaft sensor 76 and determine if the number is even or odd. If the number is odd, the program repeats back to the step S3. If, however, the number is even, then the program skips to the step S11. The reason for this is that calculations of the basic drive pulse period are performed every second revciution during idling. The reason is that the basic drive pulse period is calculated every two revolutions of the engine during idling and when there is low heat loading.

The manner in making the calculations from the steps S11-S14 will be described in conjunction with the description of the normal mode of operation.

If at the step S4 it is determined that the engine 51 is running and operating at greater than normal idle speed, the program moves to the normal mode of operation at the step S9 from the step S4. The warning light is then turned off at the step S10, and the map of Figure 10 is read from the engine speed and engine throttle position determined at the step S9 so as to determine the basic timing interval for the operation of the stepper motor 33 in accordance with a calculation that will be described later. This operation is performed in the section 126 of the ECU 67, as previously noted.

The program then moves to the step S12 so as to read the variables that may require correction of the basic lubrication pump drive interval, and in this embodiment these are engine temperature and battery voltage. As previously noted, this is done in-the circuit 127 of the ECU 67 from the maps of Figures 16 and 17. As has been previously noted, if the battery voltage is low, the timing pulse intervals is increased to compensate for the low voltage. On the other hand, if the engine temperature is high, then the pulse intervals is shortened so as to provide more rapid response for the high-temperature conditions.

The correction factors are set at the step S13 in accordance with data arrived at from the map of Figures 16 and 17, and this is performed within the section 127 of the ECU 67, as previously noted.

The program then moves to the step S14 so as to memorize the corrected value of the stepping timing.

Figure 12 shows how the actual driving pulses are output. In this program the timer is started counting at the step S21, and at the step S22 the timer output pulses are compared with the memorized value from the step S14. If the time has not elapsed, the program repeats back to the step S22. If, however, at the step S22 the time has elapsed, then the program moves to the step S23 to actually output the drive pulse to the stepper motor 83.

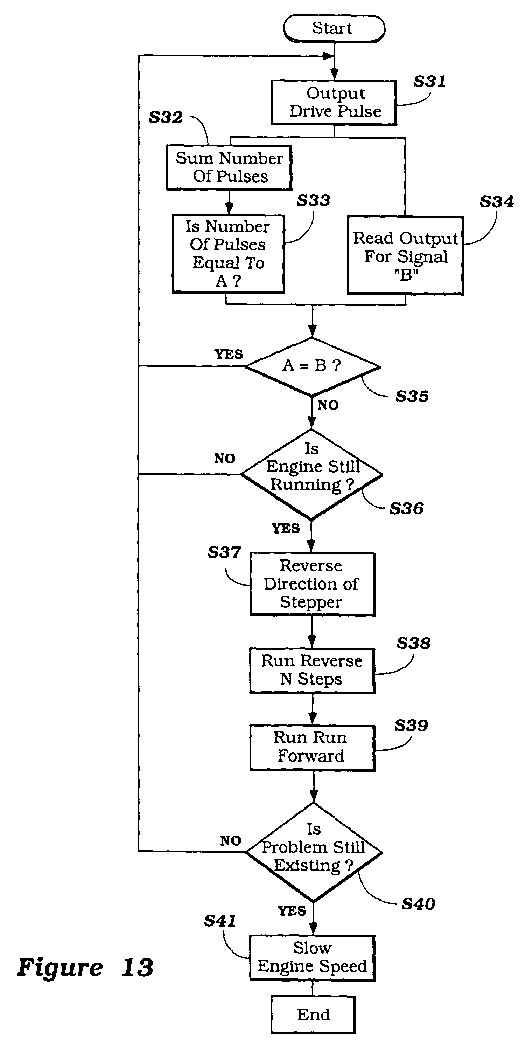

In the described operation, the amount of lubricant supplied and the operation of the stepper motor 83 is done by an open-loop method. Because of this it may be desirable, as has been previously noted, to verify that the stepper motor 83 is in time. That is, it is important to determine that the stepper motor 83 effects a complete pumping cycle for each required number of steps, four pulses in the exemplary mode. As has been previously noted, the circuit 131 of the ECU 67 makes a determination if this is the case, and the way this is done is shown in the block diagram of Figure 13, which will now be described.

Once the program starts, it moves to the step S31 wherein the output drive pulse to the stepper motor 83 is transmitted. The program then moves to the step S32 so as to sum the number of the output drive pulses. The program then moves to the step S33 so as to determine if the summed number of the output drive pulses equals A, where A is the number of pulses needed for the stepper motor to complete a single pumping cycle (4 in the example).

Simultaneously, the output of the position sensor switch 86, which indicates the position B of the pumping plunger 104 as having completed a single stroke, is monitored. At the step S35, a comparison is made at the instant the number of pulses A has been reached to determine if there is a simultaneous reading of the output signal B. If so, this indicates that the pumping plunger 104 is in phase and operating properly, and the program repeats back to the step S31.

If there is a discrepancy in the timing of the pumping plunger 104, then the program moves to the step S36 to determine if the engine 51 is still running. If it is not, the program repeats.

If, however, at the step S36 it is determined that the engine 51 is still running, then it is clear that some difficulty has occurred in the pump 82 to cause it to be out of phase. The program then moves to the step S37 so as to reverse the direction of rotation of the stepper motor 83. As has been previously noted, this is accomplished by the unit 129 of the ECU 67. This reverse operation is continued at the step S38 for a predetermined number of steps N, which may be the number required for a complete pumping cycle. The program then moves to the step S39 to cause the stepper motor 83 to again be returned to rotate in the forward direction. The program then moves to the step S40 to determine if there is now correspondence in the position of the pumping plunger 104. That is, it is determined if the problem is still existent. If it is not, the program returns back to the step S31.

If, however, at the step S40 it is determined that the pumping plunger 104 is still out of synchronism, then it is realized that there may be a problem with adequate engine lubrication and the program moves to the step S41 to reduce the engine speed by affecting the ignition control circuit 125 in the ECU 67, as previously noted. The program then ends.

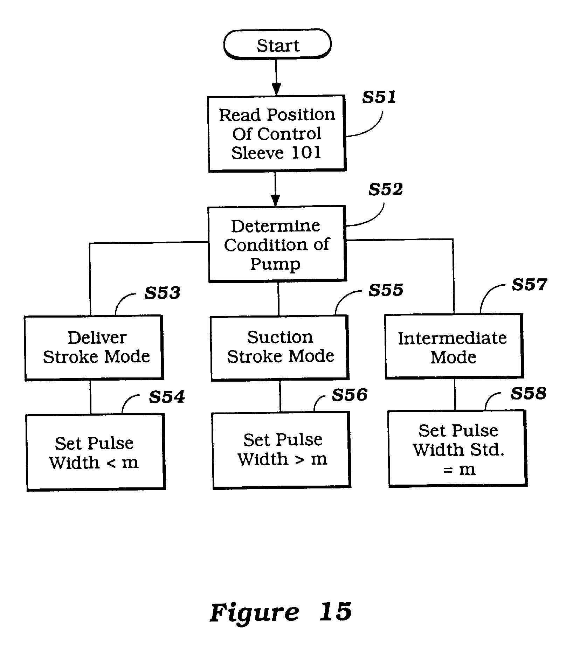

In accordance with another feature of the invention, the pulse widths of the output pulses to effect stepping of the stepper motor 83 are varied in response to the position of the pumping plunger 104, and specifically that of the delivery port 106 of the control sleeve 101. This is done so as to improve the performance of the pump 82 and this procedure is illustrated and will be described by reference to Figure 15.

In Figure 15, a control routine for varying the pulse widths depending upon the angular position of the pump 82 begins at the step S51 to determine the angular position of the control sleeve 101. This is done to determine whether the pump 82 is in a delivery or suction stroke, the respective angular positions of these phases being shown in Figures 5 and 7. The program then moves to the step S52 so as to determine whether the sensed condition of the control sleeve 101 is in a delivery stroke, a suction stroke, or an intermediate stroke. If the determination at the step S52 indicates that the pump 82 is in a delivery condition, it moves to the step S53, which is the delivery-stroke mode. If this is the case, the program then moves to the step S54 so as to set a pulse width for the operation of the stepper motor 83, which is narrower than a standard value m. This will cause the delivery stroke to be performed at a faster speed than the other strokes, and as a result, the volume of the oil pumping chamber 105 is diminished more rapidly so as to reduce the amount of internal leakage.

If, however, at the step S52 it is determined that the pump 82 is in a suction-stroke mode, then the program moves to the step S55 so as to initiate the programming for the suction-stroke mode. This then progresses to the step S56 so as to set a pulse width that is greater than the normal pulse width m so as to cause the suction stroke to occur at a slower rate of speed to prevent induction of air and increase the total amount of lubricant introduced when the pumping chamber 105 is increased in its volume and the suction is occurring.

If at the stepS52 it is determined that the pump 82 is neither in a suction-stroke mode nor in a delivery-stroke mode, then the program moves to the step S57, wherein the intermediate-stroke mode is selected. Then at the step S58 the pulse width is set as the standard pulse width m.

The method for changing the speed during the individual suction and delivery strokes, as well as maintaining the standard speed during the intermediate mode, as will become readily apparent to those skilled in the art.

The actual method of calculating the delivery time t for the delivery of lubricant in a quantity Q for each pumping cycle of the pump 82 will now be described in more detail. It should be noted that the quantity Q is the total amount of lubricant delivered by the pump 82 during a single pumping cycle, which can be easily measured. As aforenoted, because of the fact that the pump 82 delivers a finite number of small increments of lubricant, the effects of internal leakage in the pump 82 can be easily compensated for. The method of making these calculations can be understood best by reference to Figures 9, 10, and 14, all of which have been previously referred to. As has been noted, each time the ignition fires or the crankshaft position sensor 76 outputs a signal, the map of Figure 10 is read so as to determine the instantaneous oil consumption at that time interval based upon, in the illustrated embodiment, the throttle opening Thθ and engine speed in r.p.m. The actual vertical, or Z axis, component of the map of Figure 10 is equivalent to the consumption time t of the delivery amount Q divided by the number of steps necessary to deliver one pump output (four, in the described embodiment). Actually, the consumption time t is calculated beforehand from the amount of lubricant q per unit of time consumed by the engine that is mapped beforehand by actual engine measurements.

Under substantially all conditions, the timing of the ignition pulses as shown in Figure 9 is more frequent than the actual timing between the driving pulses given to the pump 82. Each time there is an ignition firing, the map of Figure 10 is read so as to determine the consumption time period t for the delivery amount Q of lubricant supplied by the pump 82 to be consumed by the engine 51 for the given engine speed and throttle opening. This is then converted into a time period a1, a2, etcetera between drive pulses and is stored in a memory. These times are then accumulated and a pump drive pulse A1, A2, A3, will be generated each time the respective time periods a1, a2, and a3 etcetera have elapsed as determined by a counter. Once four drive pulses A1, A2, A3 and A4 have been transmitted in the exemplary embodiment, the pump 82 will output an output b1, b2, etcetera in the amount Q of lubricant. In this way, the memory is constantly updated substituted new data for old data and lubricant supply is very accurately controlled.

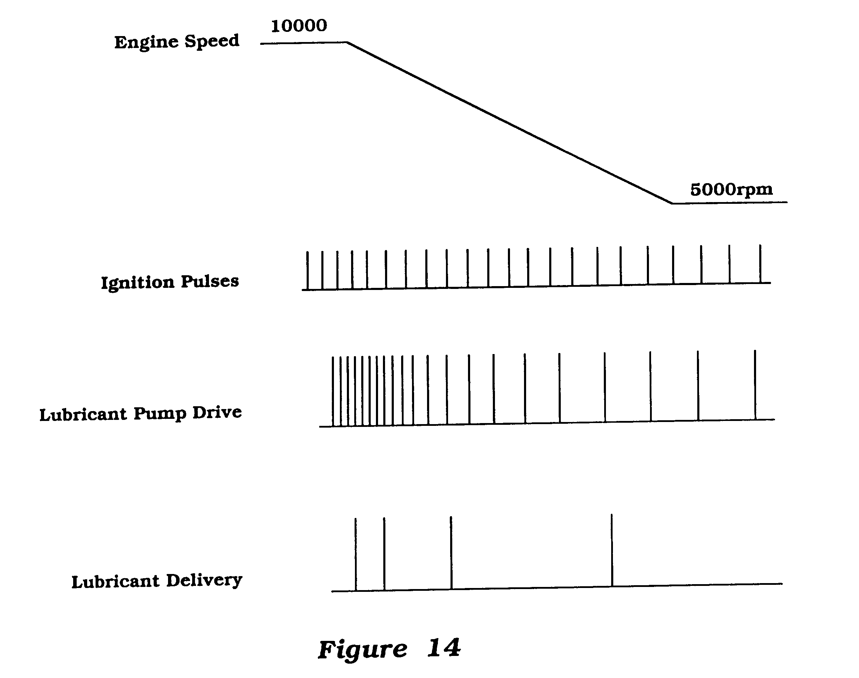

As may be seen from Figure 14, as the engine speed is increased, the time period between the ignition pulses becomes less. Thus, the system is able to respond more quickly to variations in oil consumption requirements under the more severe high-speed conditions than under the less severe low-speed conditions. Thus, even further accuracy and optimum control is provided.

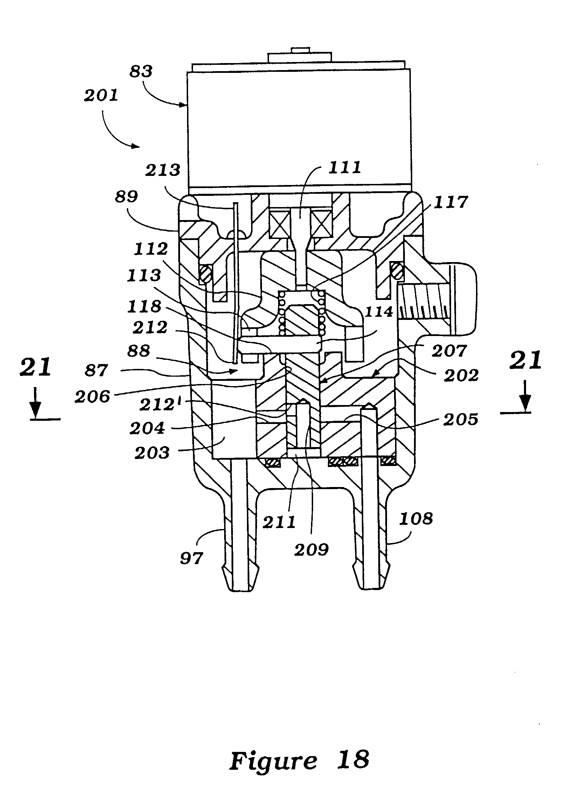

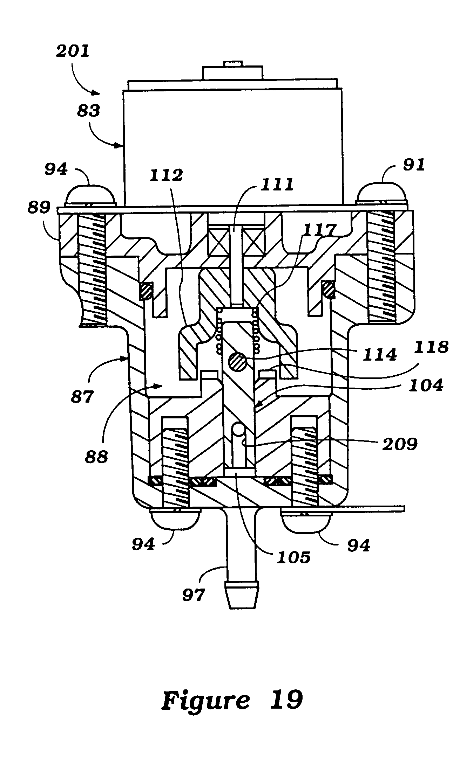

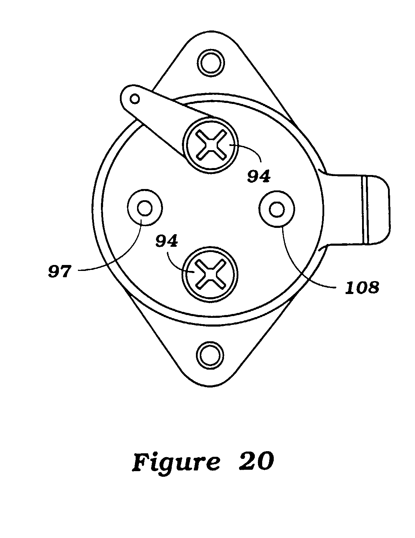

In the embodiment thus far described, the pump 82 outputs a quantity of lubricant or pumping cycle twice per revolution. Figures 18-21 illustrate another embodiment of the invention that has generally the same construction, but in this embodiment there is one pumping stroke per complete revolution of the stepper motor 83. Thus, this system utilizes only a single-inlet port and a single-outlet port and does not require any internal communication between paired inlet ports. Also, in this embodiment the actual pumping plunger serves as the distributor valve rather than requiring the separate rotating sleeve with the timing port, as with the previously described embodiment.

Since there are substantial similarities between the pump of the embodiment of Figures 18-21 and the pump of the embodiment of Figures 2-6, only components that are different are identified by different reference numerals and will be described in detail. Where components are the same or substantially the same, they are identified by the same reference numerals.

The pump in this embodiment is identified generally by the reference numeral 201 and includes a stepper motor 83, which may have the construction as previously described, and a pump housing made up of the main body member 87 and a cover piece 89, as previously described. The main housing piece 87 has its inlet port 97 disposed at 180 degrees to a single outlet nipple 108, since, as has been previously noted, there is only one pumping cycle per revolution.

A lower insert piece 202 is affixed in the cavity 88 of the lower housing piece 87 by the screws 94, as previously described. The insert piece 202 is provided with a recess 203 at one side, which communicates with the inlet port 97, and has a fixed cross-drilled passageway consisting of an inlet or suction portion 204 and an outlet or discharge portion 205, which are disposed at 180 degrees from each other and which intersect a bore 206. A pump plunger, indicated generally by the reference numeral 207, is rotatably and slidably supported in this bore 206 and has a coaxial bore 208 in its lower end that communicates with a pumping chamber 211 formed between the insert piece 202 and the lower end of the main housing 87.

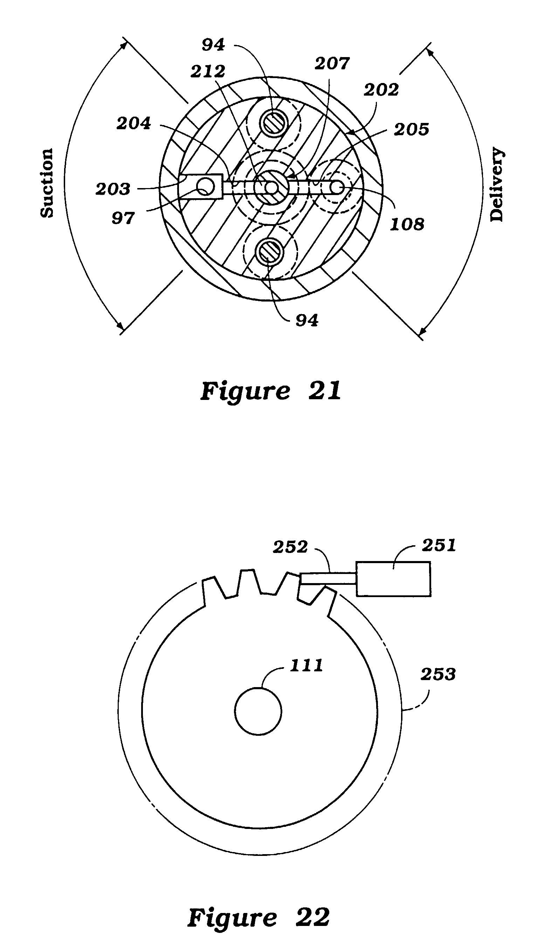

A radially extending distributor passage 212' extends through the pumping plunger 207 and intersects the counterbore 209. This passage 212' communicates with the insert piece supply or suction port 204 in the position shown in Figures 18 and 21 and with the discharge portion or delivery passage 205 when rotated through 180 degrees so as to communicate with the coaxial bore or discharge nozzle 208.

The cam mechanism and interconnection between the stepper motor output shaft and the plunger 207 for effecting its rotation and reciprocation is the same as that previously described, and for that reason, all other components, except hereinafter noted, are identified by the reference numerals previously applied and further description of them is not believed to be necessary to understand the construction and operation of this embodiment.

Since the plunger 207 performs only a single stroke per revolution of the stepper motor output shaft 111, the drive cam 118 has only one lobe and one groove, and the drive pin 114 extends only in one direction from the pump plunger 207. As a result of this, the drive pin 114 can contact a leaf spring 212 of a contact switch 213 so as to output the signal indicative of the complete revolution or home position of the pump 201 and one complete pump cycle.

In this particular embodiment, the stepper motor 83 is operated so as to rotate the pump plunger 207 through 90 degrees during each step of operation. Of course, the mechanism may be changed so as to provide a different degree of angular rotation, depending upon the particular application.

Figure 22 shows another type of stepping mechanism that may be employed so as to rotate the distributor valve and pumping plunger of the previous embodiments. In this embodiment a solenoid motor 251 has a plunger 252 that cooperates with teeth 253 of a drive gear affixed to the stepper motor output shaft 111 so as to rotate the stepper motor output shaft 111 through increments, depending upon the number and spacing of the teeth 253. A suitable ratchet mechanism or one-way clutch can be employed so as to prevent reverse rotation.

In the embodiments of the invention as thus far described, the stepper motor 83, which is employed to drive the lubricant pump and delivery system 82, can be of any conventional nature. However, as has been noted, normal stepper motors are not designed for continuous operation, as called for in this invention, and therefore it is proposed in accordance with another embodiment of the invention to employ an improved type of stepper motor. Furthermore and as has already been noted, the amount of electrical power available requires compensation in the operation of the stepper motor, and also temperature may require compensation. Furthermore, it is desirable to provide varying speeds of rotation during different parts of the operation, and the stepper motor now to be described permits the attainment of all of these functions, and further increases the versatility of the system and the ability to more finely tune the lubricant supply.

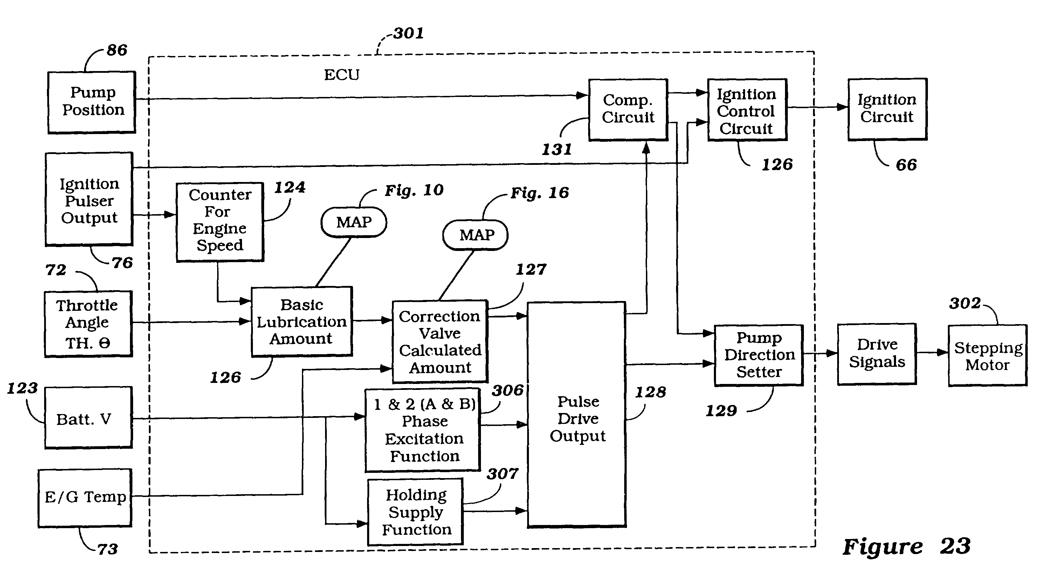

Because of the different type of stepper motor employed in this embodiment, a slightly different ECU type of control and system is employed, and this ECU is shown in block diagram in Figure 23. In many regards this embodiment is the same as that of Figure 8, and where those parts are the same or substantially the same, they have been identified by the same reference numerals and will be described again only insofar as is necessary to understand the construction and operation of this embodiment. The actual construction of the stepper motor and its mode of operation will be described later.

The ECU in this embodiment is identified generally by the reference numeral 301, and like the previous embodiments has the same external sensors that provide indication of the position of the lubricant pump (sensor 86); the rotation of the engine output shaft, sensor or pulsar coil 76; throttle angle position, as determined by the throttle angle position sensor 72; battery voltage, as determined by a battery-voltage sensor 123; and engine temperature, as sensed by the engine temperature 73. Again, the output signals control the same components in accordance with the lubrication system, and these include the ignition circuit 66 and the stepper motor, which in this embodiment is identified generally by the reference numeral 302.

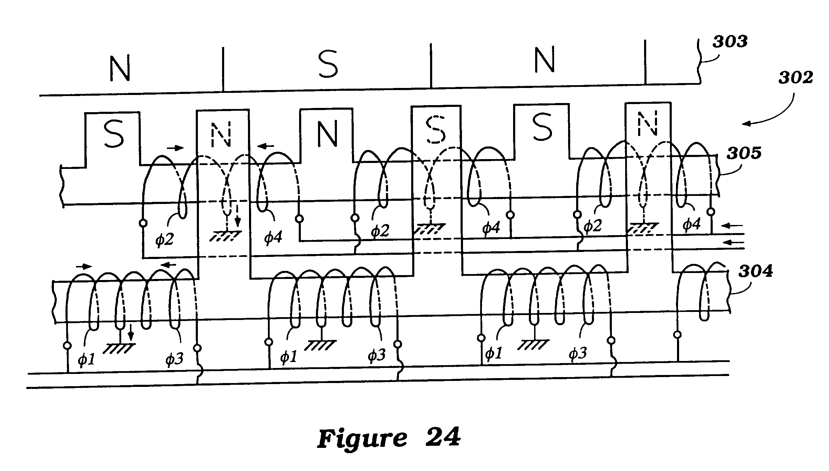

The stepping motor 302 is shown schematically in Figure 24 and is comprised of a rotor 303, which drives the stepper motor output shaft 111 or a pawl-type mechanism for rotating the shaft and which has arranged on its periphery a series of permanent magnets magnetized into multiple poles, as shown therein. Associated with this rotor 303 is a first stator section 304 that has pairs of coils ϕ1 and ϕ3 located around the rotor 303. A second stator section having pairs of coils ϕ2 and ϕ4 is indicated generally by the reference numeral 305, and is also disposed in proximity to the rotor 303. The respective coils have poles, as shown in Figure 24, and these poles are staggered relative to each other. These pairs of stator sections 304 and 305 and their respective coils are utilized for a purpose that will be described, and this includes a compensation for variations in voltage.

Because the voltage variation is done by utilizing the pairs of stator sections 304 and 305, the correction value calculation in the circuit 127 of the ECU 301 only reads the temperature compensation map of Figure 16, with the voltage compensation being done separately, as will be described.

The output voltage from the battery voltage sensor 123 is provided to two additional control circuits of the ECU 301, these being the phase excitation function, indicated schematically at 306, and a holding supply function, indicated at 307. These circuits output their signals also to the pulse drive output circuit 128 in addition to the corrected temperature value received from the circuit 127.

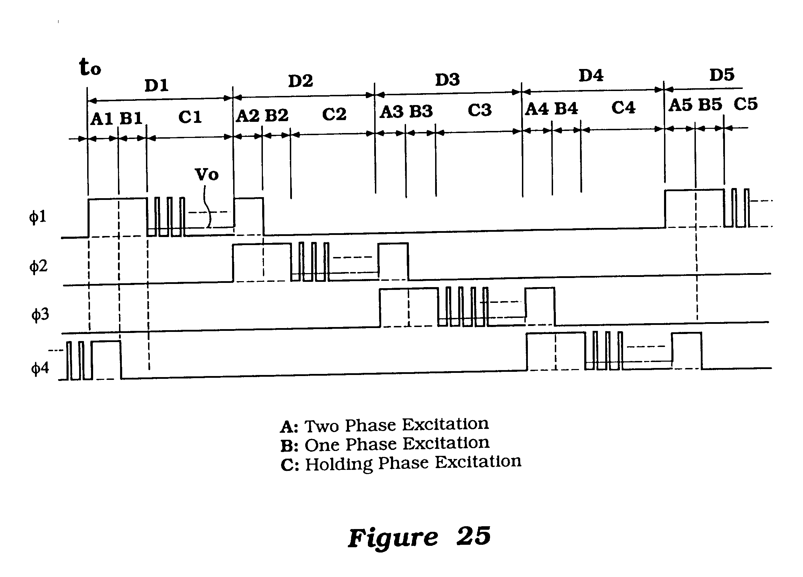

The way in which the voltage variation from the source can be compensated for by this system and also the way in which it is possible to vary the operation and advancement of the rotor 303 will now be described by particular reference to Figures 25-27.

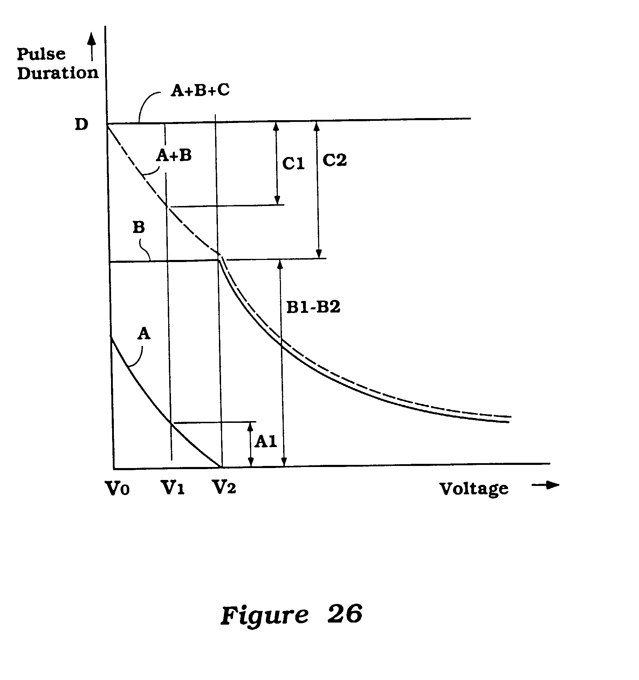

Figure 26 is a graphical view that explains how voltage compensation can be accomplished with this system by selectively energizing either the two phase excitation (A), the one phase excitation (B), or a combination of the two of them. This curve shows the total pulse duration D for a given time period of operation of the stepper motor 302. The curve A shows the pulse duration necessary to achieve a given amount of stepping operation by the energization of the two phase excitation-while the curve B shows the duration period for stepping operation by the one phase excitation. The curve A+B (the broken curve in this figure) indicates the sum of the effect of the two operations. Where the curve A+B falls below the curve B the difference between the line D and the curve A+B indicates the dwell holding time C.

The voltage value is indicated on the abscissas. It will be seen at the minimum voltage V₀ it is necessary to energize both the two phase excitation and the one phase excitation for the respective time periods in order to accomplish complete movement of the stepper motor 302 within the time period D. As the voltage increases from the voltage V₀ to the voltage V₁, the pulse duration of the two phase excitation can be reduced while holding the one phase excitation constant. This is done to conserve electrical energy and also to reduce the amount of heat generated in the stepper motor 302. This results in the sum of the durations A and B being less than D and thus at the voltage V₁ there is a dwell or holding period C₁ during which the holding phase excitation is accomplished. At this voltage V₁ the two phase excitation period is only the period A₁ so it will be seen that electrical consumption and heat is substantially reduced.

When the voltage reaches the desired maximum voltage V₂ it is no longer necessary to execute the two phase excitation and, therefore, only the single phase excitation occurs for the time period B2. At this time, the holding phase is substantially longer as at C2. Thus, total power consumption and heat are both substantially reduced.

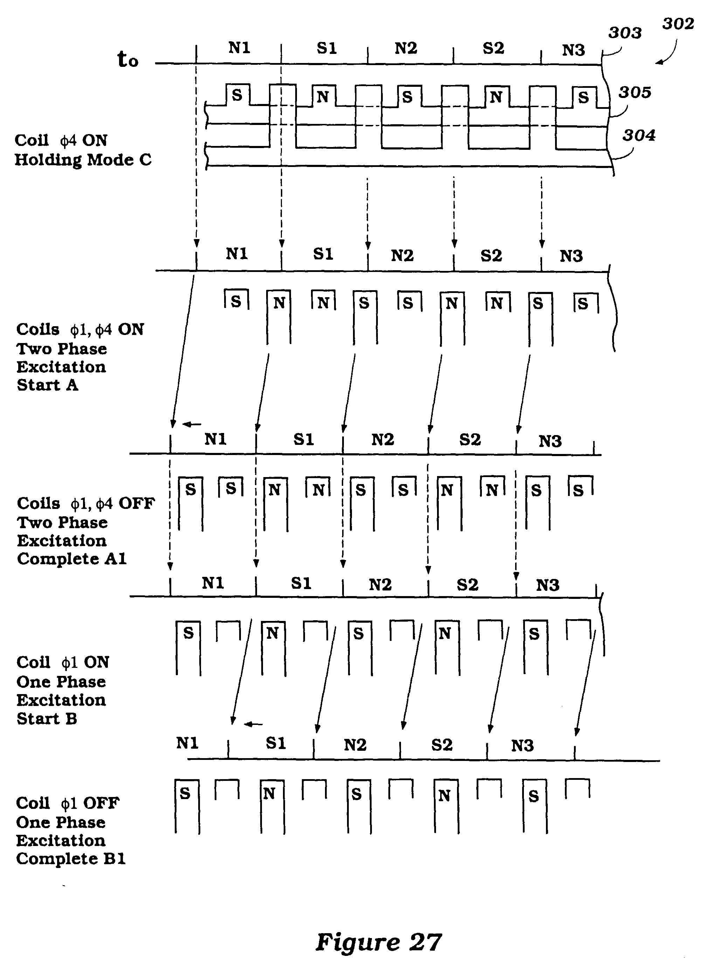

Figures 25 and 27 show on a developed view the effect of this during a cycle of operation. Figure 27 shows the operation during the time period D1 while Figure 25 shows successive operations.

At the time t₀ the time period the holding phase C of the previous cycle is on and the rotor 303 is in the position relative to the stators as shown in Figure 27. The two phase excitation is then begun at the point t₀ and the effect of this is shown in the next two figures of Figure 27 wherein the rotor 303 rotates from the position N₁ to a new position as the coils φ1 and φ4 are excited. This continues to the point A1 when the two phase excitation is stopped. Then at the point where B1 begins, the coil φ1 is still excited and additional rotation of the rotor 303 will occur from the point B₀ to B1 as shown in Figure 27. After this, the holding phase is begun by pulsing the coil C1 only to maintain sufficient energization to hold the rotor 303 in position for the remaining time period C1. Of course, the time of excitation will vary from cycle to cycle as the demands of lubricant amount vary and this is shown in Figure 25.

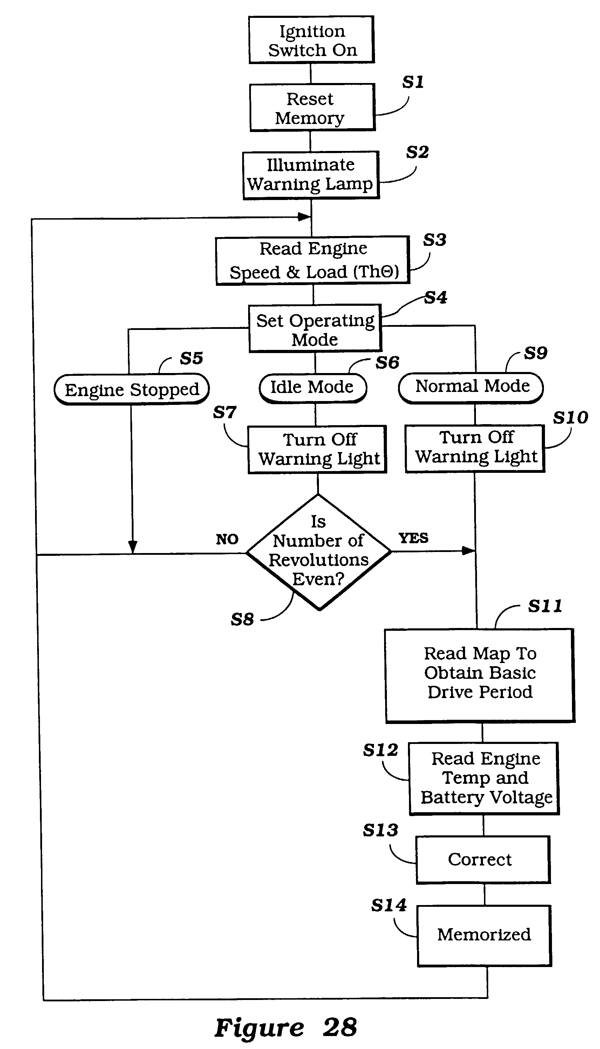

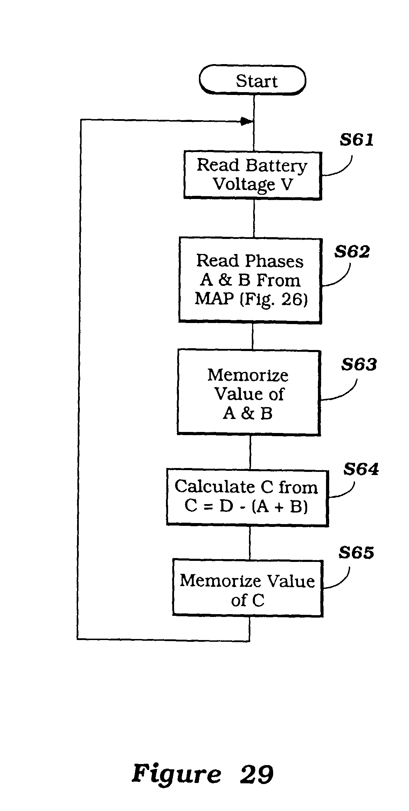

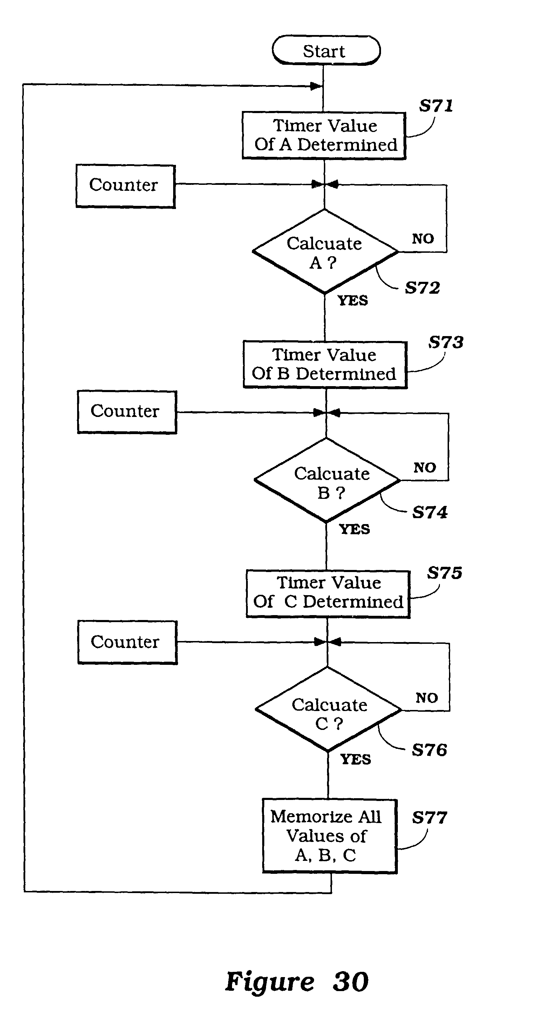

The actual control routine will now be described by reference to Figures 28, which shows the initial control routine in Figures 29 and 30 which show further control routines. Referring first to Figure 28, the control routine of this embodiment is substantially the same as the control routine of the previously described embodiment as illustrated in Figure 11. However, the values are arrived at slightly differently, as will be described. For that reason, where the steps are the same or substantially the same as the previously described embodiment, the same reference characters will be applied for the steps.

Again, the program begins when the ignition switch is turned on and then the memory is reset at the step S1 and the warning light is illuminated at the step S2 to provide a self-checking function as aforenoted.

The program then moves to the step S3 so as to read the engine conditions these being speed and load as determined by throttle valve setting in the embodiments described. The program then moves to the step S4 so as to determine the engine running conditions so as to set the operating mode.

If at the step S4 it is determined that the engine speed is zero, then it is determined that the engine 51 is stopped and the engine stopped mode S5 is performed wherein the program repeats back to the step S3.

If at the step S4 it is determined that the engine 51 is operating at idle speed, the program moves to the step S6 to set the engine idle mode and then moves to the step S7 so as to turn off the warning light. The program then moves to the step S8 so as to determine if the number of engine rotations is even or odd for the reason already noted. If the number of revolutions is odd, the program repeats back to the step S3. If, however, the number of engine revolutions is even then the process skips to the step S11, to be described later, so as to set the respective drive pulses.

If at the step S4 it is determined that the engine 51 is operating and at a speed above the idle speed, the program moves to the normal mode of operation beginning at the step S9. The program then moves to the step S10 so as to turn off the warning light.

At the completion of the step S10 or if the step S8 determines an even engine revolution number, the program then moves to the step S11 so as to set the basic pulse drive interval D. This is done at the step S11 wherein the basic drive period is read from a map, such as the map of Figure 10 previously referred to. The battery voltage and engine temperature are then read at the step S12, for the reasons aforenoted, and the correction factors determined at the step S13 so as to obtain the corrected value of D which is then memorized at the step S14.

Once the basic value for the drive pulse time D is determined, then the program determines the time periods A and B, if both are required, by reference to a control routine as shown in Figure 29 and using the data from an appropriate map similar to that of Figure 26 for the desired pulse duration D and the selection of the time duration A for any two phase excitation and B for the one phase excitation as well as how to compute the holding phase excitation period C.

As seen in Figure 29, when the program starts it moves to the step S61 to read the battery voltage. The program then moves to the step S62 to consult the map such as one of the family of maps as shown in Figure 26, as aforenoted, to read the two phase excitation drive pulse A and the one-phase excitation pulse B. The program then moves to the step S63 so as to memorize these values of A and B. The program then moves to the step S64 to calculate the holding time C by subtracting from the previous noted value of D determined at step 14 of Figure 28. The value of C is then memorized at the step S65.

The timer values of A, B, and C are then calculated in a manner as shown in Figure 30. At the step S71, the timer value of A is red from a map like that of Figure 29. The timer value (number of counts) is then determined by dividing the value of A by the time intervals of the counter in the ECU 301.

Then the program moves to the step S73 so as to read the value of B from a map like Figure 26. Then at the step 374 the value of the time B is dividing by the time intervals of the counter of the ECU 301 to determine the requisite number of timer steps.

Then the program moves to the step S75 to calculate the time of the holding phase C. This is done by subtracting from D the sum of A + B. The timer value is then calculated at step 576 by taking the value of C and dividing it by the timer intervals of the counter of the CPU 301.

Once all timer values have been calculated, the program moves to the step S77 so as to output these values.

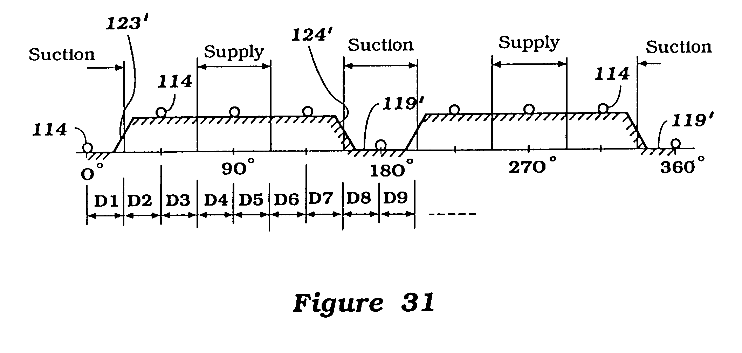

As has been previously noted in conjunction with the description of Figure 7, the ending periods of each of the steps D1, D2, D3, etc. is timed to occur so that the drive pin 114 of the lubricant pump 82 will not be on either of the ramps 123" and 124". Therefore, the holding phase C need only supply sufficient power to provide hoiding of the stepper motor 302 against any external forces. However, in some instances it may be desirable to employ smaller steps so as to provide even more accuracy in the control and Figure 31 shows such a situation wherein the pulse intervals achieve 22.5° of rotation rather than 45° as previously described. Therefore, there are times when the drive pin 114 will be brought to rest on either of the ramps 123" or 124". When this occurs, then it is desirable to ensure that the holding current C is sufficient to resist the action caused by the fact that the drive pin 114 is on one of the ramps 123" and 124". Hence, under these phases the program can be set so as to provide the proper holding current so as to ensure that rotation will not occur due to the cam action.

It should be readily apparent from the foregoing description that the described embodiments of the invention are extremely effective in providing very efficient and quite simple control for the amount of lubricant supplied to a machine such as a two-cycle internal combustion engine. In addition, the control is such that it can respond rapidly and internal pumping losses can be easily accommodated. In addition, the stepper motor construction described in one embodiment is effective in ensuring low power consumption and low heat generation.

In a summary, a lubricating system for a machine such as a two-cycle internal combustion engine including a reciprocating pump that pumps a finite amount of lubricant during a single pumping stroke and a stepper motor for operating the pump through incremental phases of movement each less than a stroke. The lubricant requirements of the machine are determined and the driving increments are adjusted so as to provide a pumping stroke when the lubricant consumption of the machine reaches the output of the pump. Various arrangements of stepper motors and control arrangements are disclosed for controlling the amount and timing of the lubricant delivery.

## Claims

1. Method of supplying lubricant to a machine (51), in particular an internal combustion engine (51), comprising a stepper motor controlled lubricant pump (82), **characterized in that** the lubricant pump (82) is operable through a fixed range of movement for delivering a fixed amount of lubricant only upon movement through said fixed range by said stepper motor (83) in incremental steps of movement each less than said fixed range, said lubricant pump (82) comprising a rotor (303) magnetized in multiple poles and the stator (304, 305) with multiple phase windings (θ₁₋₄) controlling the rotation of the rotor (303) by alternate one- and two-phases excitation in which either of the windings (θ₁) is excited in a one-phase excitation and two of the windings (θ_{1,4}) are simultaneously excited in a two-phase excitation, said method comprising the steps of determining the machine running conditions, determining the consumption of lubricant by said machine (51) from said determination and operating said stepper motor (83) to effect separate movement of said stepper motor (83) upon a predetermined amount of lubricant consumption.

2. Method as claimed in claim 1, **characterized in that** a drive pulse period according to a target rotation speed of the rotor (303) is obtained and that the drive pulse period for power supply control is controlled in three divisions consisting of a one-phase excitation period, a two-phase excitation period and a one-phase excitation holding period, controlling the power supply for the one-phase excitation holding period to either zero or a value lower than that of an excitation drive period.

3. Method as claimed in claim 2, **characterized in that** the one-phase excitation holding period is controlled to a minimum value required for holding a valve member of the lubrication to a specified angular position be means of said stepper motor (83).

4. Method as claimed in claims 2 or 3, **characterized in that** an excitation period of the stator windings (304, 305) is controlled variably such that the higher the power source voltage, the shorter the lengths of the one- and two-phase excitation drive periods.

5. Method as claimed in at least one of the preceding claims 2 to 4, **characterized in that** under conditions when the power source voltage exceeds a predetermined threshold voltage, only one-phase excitation and one-phase excitation holding is performed while simultaneously the higher the power source voltage the shorter is controlled the one-phase excitation drive periods, and that under conditions when the power source voltage is below said predetermined threshold voltage the one- and two-phase excitation drive and the one-phase excitation holding is performed while simultaneously the two-phase excitation drive period is controlled to be longer the lower the power source voltage is.

6. Method as claimed in at least one of the preceding claims 1 to 5, **characterized in that** the pump (82) is operable during the fixed range through a suction cycle, a dwell cycle and a delivery cycle.

7. Method as claimed in at least one of the preceding claims 1 to 6, **characterized in that** the pump (82) comprises a reciprocating pump and the stepper motor (302) and that the stepper motor (303) has a pair of stator windings (304, 305) having spaced apart coils and selective of the stator windings (304, 305) are selectively operable energized depending upon predetermined conditions.

8. Method as claimed in claim 7, **characterized by** the step of operating the stator windings (304, 305) for establishing a holding time during which movement of the stepper motor (302) is precluded.

9. Method as claimed in claims 7 or 8, **characterized in that** the time duration the various stator windings (304, 305) are energized is varied in response to a condition other than the machine running conditions, said condition preferably comprising the voltage available for powering the stator windings (304, 305).

10. Method as claimed in claim 9, **characterized in that** only one of the stator windings (304, 305) is energized if the voltage is more than a predetermined amount and that there is no holding time when the voltage falls below a predetermined amount.

11. Method as claimed in claims 9 or 10, **characterized by** the step of comparing the number of pulses generated on the stepper motor (302) to rotate the stepper motor (302) through the predetermined range and a predetermined position of the stepper motor (302).

12. Method as claimed in claim 11, **characterized by** the further steps of reversing the direction of rotation of the stepper motor (302) if the position of the stepper motor (302) after a predetermined number of pulses does not coincide wit the predetermined position.

13. Method as claimed in claim 12, **characterized by** the further steps of reinitiating rotation of the stepper motor (302) in the forward direction after a predetermined number of reverse steps and slowing the speed of the machine (54), particularly of the engine, if the desired position of the stepper motor (302) does not coincide with the actual position upon resumption of forward drive.

14. Method as claimed in at least one of the preceding claims 1 to 13, **characterized in that** the pump (82) further includes a delivery control for controlling the admission of lubricant to a pumping cavity (88) during a suction stroke and for communication the pumping cavity (88) with the machine (51) in particular the engine during the delivery stroke.

15. A system for supplying lubricant to a machine (51), in particular lubricating system (77) for an internal combustion engine (51), comprising a lubricant supply unit having a lubricant pump (82), in particular for performing the method according to at least one of the preceding claims 1 to 14, **characterized in that** the lubricant pump (82) comprises a rotatable valve body which is operated by a solenoid (251) being driven in a pulse mode manner or by a stepper motor (83) in a step-wise manner by a predetermined angle of rotation (θ) every time the stepper motor (83) receives a drive pulse signal from a control unit (67), comprising a liquid amount calculating means and a liquid delivery period calculating means in response to the engine operating conditions for obtaining an amount of liquid per unit time commensurate with instant machine operating conditions and for obtaining a liquid consumption time for 1/n of the delivery amount per one delivery stroke from the lubricant pump (83), based on the liquid amount required per unit time and obtaining the delivery period of the lubricant pump (83) by totaling the consumption time for n-times.

16. A system as claimed in claim 15, **characterized in that** the lubricant pump (82) is of a pulse delivery type rotating a valve body (85) at intervals about a specific angle of rotation (θ) every time a drive pulse signal is input to its drive means for (n) times or by a total angle of n x θ, delivering lubricating oil at the timing of the n-th rotation.

17. A system as claimed in claim 15 or 16, **characterized in that** the lubrication pump (82) comprises a pump chamber (88) defined by the valve body (104) which is rotatable and reciprocable, said pump chamber (88) being communicated to a liquid suction passage (81) and a liquid delivery passage (84) successively in response to the angular position of the valve body (104).

18. A system as claimed in at least one of the preceding claims 15 to 17, **characterized in that** the solenoid (251) or the stepper motor (83) operates the lubricant pump (82) in response to certain conditions, specifically in response to the machine running conditions, specifically in response to machine speed.

19. A system as claimed in at least one of the preceding claims 15 to 18, **characterized in that** the angular position of the valve body (104) of the lubricant pump (82) is determined by means of counting the pulse drive signals to the solenoid (251) or the stepper motor (83).

20. A system as claimed in claim 19, **characterized in that** a plurality of detecting sensors (72-76) for detecting operating conditions are provided, their output being fed to the control unit.

21. A system as claimed in at least one of the preceding claims 15 to 20, **characterized in that** the lubricating oil and the lubrication pump (82) are for lubricating an internal combustion engine, specifically a two cycle engine directly at the spots to be lubricated.

22. A system for lubricating a machine (51) such as an engine, particularly adapted for performing the method according to at least one of the preceding claims 1 to 14, comprising a pump (82) operable through a fixed range of movement for delivering a fixed amount of lubricant, only upon movement through said fixed range, a drive for driving said pump (82) in incremental steps of movement each less than said fixed range, sensor means (72-76) for determining the machine running conditions, a lubricant consumption determiner for determining the consumption of lubricant by said machine (51) from the output of said sensor means (72-76), and an operator for operating said drive to effect a step of movement of the drive upon a predetermined amount of lubricant consumption.

23. A system as claimed in at least one of the preceding claims 15 to 22, **characterized in that** the pump (82) is operable during the fixed range through a suction cycle, a dwell cycle and a delivery cycle.

24. A system as claimed in at least one of the preceding claims 15 to 23, **characterized in that** the pump (82) comprises a reciprocating pump.

25. A system as claimed in at least one of the preceding claims 15 to 24, **characterized in that** the drive comprises a stepper motor (83).

26. A system as claimed in at least one of the preceding claims 15 to 25, **characterized in that** the stepper motor (302) comprises a pair of stator windings (304, 305) having spaced apart coils and wherein the operator is selectively operable to energize respective of said stator windings (304, 305) depending upon predetermined conditions.

27. A system as claimed in claim 26, **characterized by** means for operating the stator windings (304, 305) for establishing a holding time during which movement of the stepper motor (302) is precluded.

28. A system as claimed in claim 27, **characterized in that** the time duration the various stator windings (304, 305) are energized is variable in response to a condition other than the machine running condition.

29. A system as claimed in claim 28, **characterized in that** said other condition comprises the voltage available for powering the stator windings (304, 305).

30. A system as claimed in at least one of the preceding claims 26 to 29, **characterized in that** only one of the stator windings (304, 305) is energized if the voltage is more than the predetermined amount.

31. A system as claimed in at least one of the preceding claims 29 or 30, **characterized in that** there is no holding time when the voltage falls below a predetermined amount.

32. A system as claimed in at least one of the preceding claims 16 to 31, **characterized by** a timing comparator for comparing the number of pulses generated on the stepper motor (302) to rotate the stepper motor (302) through a predetermined range and a position sensor for sensing the predetermined position of the stepper motor (302).

33. A system as claimed in claim 32, **characterized by** operating the operator means to reverse the direction of rotation of the stepper motor (302) of the position of the stepper motor (302) after the number of pulses does not coincide with the desired position.

34. A system as claimed in claims 32 or 33, **characterized in that** the operator is effective to reinitiate rotation of the stepper motor (302) in the forward direction after a predetermined number of reverse steps and further including means for slowing the speed of the machine (51), in particular engine, if the desired position of the stepper motor (302) does not coincide with the actual position upon resumption of forward drive.

35. A system as claimed in at least one of the preceding claims 15 to 34, **characterized in that** the pump (82) further includes a delivery control for controlling the admission of lubricant, to a pumping cavity (88) during a suction stroke and for communicating the pumping cavity (88) with the machine (51), in particular engine, during the delivery stroke.

36. A system as claimed in at least one of the preceding claims 15 to 35 **characterized in that** the reciprocating pump (82) is comprised of a pumping plunger (104) driven by a cam (118) having an inclined surface and rotatable about an axis for reciprocating said pumping plunger (104).

37. A system as claimed in claim 36, **characterized in that** the operator effects the stepping movement of the stepper motor (83) to preclude the completion of a step when the cam (118) is on a ramp.

38. A system as claimed in claims 36 or 37, **characterized in that** the operator is effective to provide a holding force for the stepper motor (83) in the event a step is completed when the cam (118) is on a ramp.

39. A system as claimed in at least one of the preceding claims 15 to 38, **characterized in that** the lubricant pump (82) is a reciprocating pump comprised of a pumping plunger (104) reciprocable in a cylinder for pumping the lubricant, a rotary cam (118) rotatable through a predetermined angular position for operating said pumping plunger (104) through a complete stroke of operation, the stepper motor (83) for rotating said cam (118) in angular steps each less than the angular amount required for operation of said pumping plunger (104) through a complete stroke, a sensor for sensing when said pumping plunger (104) is an a predetermined position in its stroke, a counter for counting the number of steps of said stepper motor (83) required for driving said pumping plunger (104) to said position, a comparator for comparing when the number of steps has been effected and the output of said sensor and for reversing the direction of rotation of said stepper motor (83) when said counter and the output of the position sensor do not coincide.

40. A system as claimed in claim 39, **characterized in that** the position sensor senses the position of the pumping plunger (104) at the completion of its stroke.

41. A system as claimed in claim 39 or 40, **characterized in that** the number of steps of operation of the stepper motor (83) to drive the pumping plunger (104) to its complete stroke is an integer.

42. Drive unit for a system for supplying liquid to a machine as claimed in at least one of the preceding claims 15 to 41, **characterized by** a rotor (303) having a plurality of circumferentially arranged permanent magnets, a first stator winding (304) having a first series of coils juxtaposed to said rotor (303), a second stator winding (305) having a second series of coils juxtaposed to said rotor (303), the coils of said second series being offset from the coils of said first series, and a controller for applying electrical power to the coils of said windings depending on a condition.

43. Drive unit as claimed in claim 42, **characterized in that** the condition comprises the voltage available.

44. Drive unit as claimed in claims 42 or 43, characterized in that the control (67) further energizes at least one of the coils of one of the windings for holding the rotor (303) against rotation.

## Patentansprüche

1. Verfahren zum Zuführen von Schmiermittel zu einer Maschine (51), insbesondere einer Brennkraftmaschine (51), welche eine durch einen Schrittmotor gesteuerte Schmiermittelpumpe (82) enthält, **dadurch gekennzeichnet, daß** die Schmiermittelpumpe (82) über einen festgelegten Bewegungsbereich betreibbar ist zum Zuliefern einer festgelegten Schmiermittelmenge nur durch Bewegen des Schrittmotors (83) in dem festgelegten Bereich in Einzelbewegungsschritten, die jeweils kleiner als der festgelegte Bereich sind, welche Schmiermittelpumpe (82) umfaßt einen mit mehreren Polen magnetisierten Rotor (303) und den Stator (304, 305) mit mehreren Phasenwicklungen (φ₁₋₄), welche die Drehung des Rotors (303) durch abwechselnde Ein- und Zweiphasen-Beaufschlagung steuern, wobei eine der Wicklungen (φ₁) in einer Einphasen-Beaufschlagung beaufschlagt wird und zwei Wicklungen (φ_{1,4}) gleichzeitig in einer Zweiphasen-Beaufschlagung beaufschlagt werden, wobei das Verfahren die Schritte umfaßt des Bestimmens der Maschinenlaufbedingungen, des Bestimmens des Schmiermittelverbrauchs durch die Maschine (51) aus diesem Bestimmen, und Betätigen des Schrittmotors (83), um eine getrennte Bewegung des Schrittmotors (83) auf eine vorgegebene Menge des Schmiermittelverbrauchs hin zu bewirken.

2. Verfahren nach Anspruch 1, **dadurch gekennzeichnet, daß** eine einer Solldrehzahl des Rotors (303) entsprechende Ansteuerimpuls-Zeitlänge erreicht wird und daß die Ansteuerimpuls-Zeitlänge für die Stromversorgungssteuerung in drei Unterteilungen gesteuert wird, die bestehen aus einer Einphasenbeaufschlagungszeit, einer Zweiphasenbeaufschlagungszeit und einer Einphasenbeaufschlagungs-Haltezeit, wobei die Stromversorgung für die Einphasenbeaufschlagungs-Haltezeit entweder Null oder ein Wert ist, der geringer als der der Beaufschlagungsansteuerzeit ist.

3. Verfahren nach Anspruch 2, **dadurch gekennzeichnet, daß** die Einphasenbeaufschlagungs-Haltezeit auf einen Minimalwert gesteuert wird, der zum Halten des Ventilteils der Schmierung auf einer bestimmten Winkelposition mittels des Schrittmotors (83) erforderlich ist.

4. Verfahren nach Anspruch 2 oder 3, **dadurch gekennzeichnet, daß** eine Beaufschlagungszeitlänge der Statorwicklungen (304, 305) variabel so gesteuert wird, daß die Länge der Ein- und Zweiphasenbeaufschlagungs-Ansteuerzeiträume umso kürzer ist, je hoher die Stromquellenspannung ist.

5. Verfahren nach mindestens einem der vorangehenden Ansprüche 2 bis 4, **dadurch gekennzeichnet, daß** unter Bedingungen, zu denen die Stromquellenspannung eine vorgegebene Schwellenspannung übersteigt, nur Einphasenbeaufschlagung und Einphasenbeaufschlagungshaltung ausgeführt wird, während gleichzeitig die Einphasenbeaufschlagungs-Ansteuerperioden umso kürzer gesteuert werden, je höher die Stromquellenspannung ist, und daß bei Bedingungen, zu denen die Stromquellenspannung sich unter der vorgegebenen Schwellenspannung befindet, die Ein- und die Zweiphasenbeaufschlagungs-Ansteuerung und die Einphasenbeaufschlagungs-Haltung ausgeführt wird, während gleichzeitig die Zweiphasenbeaufschlagungs-Ansteuerzeit auf umso längere Zeiträume gesteuert wird, je niedriger die Stromquellenspannung ist.

6. Verfahren nach mindestens einem der vorangehenden Ansprüche 1 bis 5, **dadurch gekennzeichnet, daß** die Pumpe (82) während eines festgelegten Bereiches durch einen Ansaugzyklus, einen Haltezyklus und einen Lieferzyklus betreibbar ist.

7. Verfahren nach mindestens einem der vorangehenden Ansprüche 1 bis 6, **dadurch gekennzeichnet, daß** die Pumpe (82) eine Hubkolbenpumpe und den Schrittmotor (302) umfaßt und daß der Schrittmotor (302) ein Paar Statorwicklungen (304, 305) besitzt mit voneinander getrennten Spulen und daß ausgewählte Statorwicklungen (304, 305) in Abhängigkeit von vorgegebenen Zuständen selektiv durch Beaufschlagen betätigbar sind.

8. Verfahren nach Anspruch 7, **gekennzeichnet durch** den Schritt des Betätigens der Statorwicklungen (304, 305) zum Einrichten einer Haltezeit, während welcher die Bewegung des Schrittmotors (302) ausgeschlossen ist.

9. Verfahren nach Anspruch 7 oder 8, **dadurch gekennzeichnet**, daß die Zeitdauer der Beaufschlagung der verschiedenen Statorwicklungen (304, 305) in Abhängigkeit von einer anderen Bedingung als den Maschinenlaufbedingungen verändert wird, welche Bedingung vorzugsweise die zum Beaufschlagen der Statorwicklungen (304, 305) verfügbare Spannung umfaßt.

10. Verfahren nach Anspruch 9, **dadurch gekennzeichnet, daß** nur eine der Statorwicklungen (304, 305) beaufschlagt wird, falls die Spannung hoher als eine vorgegebene Größe ist, und daß keine Haltezeit vorhanden ist, falls die Spannung unter eine vorgegebene Größe abfällt.

11. Verfahren nach Anspruch 9 oder 10, **gekennzeichnet durch** den Schritt des Vergleichens der Anzahl von Impulsen, die an dem Schrittmotor (302) zum Drehen des Schrittmotors (302) durch einen vorgegebenen Bereich erzeugt wurden mit einer vorgegebenen Position des Schrittmotors (302).

12. Verfahren nach Anspruch 11, **gekennzeichnet durch** die weiteren Schritte des Umkehrens der Drehrichtung des Schrittmotors (302), falls die Position des Schrittmotors (302) nach einer vorgegebenen Anzahl von Impulsen nicht mit der vorgegebenen Position übereinstimmt.

13. Verfahren nach Anspruch 12, **gekennzeichnet durch** die weiteren Schritte des Neueinleitens der Drehung des Schrittmotors (302) in der Vorwärtsrichtung nach einer vorgegebenen Anzahl von Rückwärtsschritten, und Vermindern der Drehzahl der Maschine (51), vorzugsweise der Antriebsmaschine, falls die gewünschte Position des Schrittmotors (302) nach Wiederaufnahme des Vorwärtsantriebs nicht mit der tatsächlichen Position übereinstimmt.

14. Verfahren nach mindestens einem der vorangehenden Ansprüche 1 bis 13, **dadurch gekennzeichnet, daß** die Pumpe (82) weiter eine Zuliefersteuerung enthält zum Steuern der Zufuhr von Schmiermittel in einen Pumpenhohlraum (88) während eines Ansaughubs und zum Verbinden des Pumpenhohlraumes (88) mit der Maschine (51), insbesondere der Antriebsmaschine, während des Lieferhubes.

15. System zum Zuführen von Schmiermittel zu einer Maschine (51), insbesondere Schmiersystem (77) für eine Brennkraftmaschine, welche eine Schmiermittelzuführeinheit mit einer Schmiermittelpumpe (82) umfaßt, insbesondere zum Ausführen des Verfahrens gemäß mindestens einem der vorangehenden Ansprüche 1 bis 14, **dadurch gekennzeichnet, daß** die Schmiermittelpumpe (82) einen drehbaren Ventilkörper umfaßt, der durch einen Magneten (251) betätigt wird, welcher in einer Impulsbetriebsweise angetrieben wird, oder mit einem Schrittmotor (33) in einer schrittartigen Weise über einen vorgegebenen Drehwinkel (θ) jedesmal, wenn der Schrittmotor (83) ein Ansteuerimpulssignal von einer Steuereinheit (67) empfängt, welche eine Einrichtung zur Berechnung der Flüssigkeitsmengen und eine Einrichtung zur Berechnung des Flussigkeitslieferzeitraumes in Abhängigkeit von den Maschinenbetriebsbedingungen umfaßt zum Erhalten einer Flüssigkeitsmenge pro Zeiteinheit, die den gegenwärtigen Maschinenbetriebsbedingungen entspricht, und zum Erhalten einer Flüssigkeitsverbrauchszeit für 1/n der Liefermenge pro Lieferhub der Schmiermittelpumpe (83) basierend auf der pro Zeiteinheit erforderlichen Flüssigkeitsmenge, und zum Erhalten des Lieferzeitraums der Schmiermittelpumpe (83) durch n-maliges Aufsummieren dieser Verbrauchs zeit.

16. System nach Anspruch 15, **dadurch gekennzeichnet, daß** die Schmiermittelpumpe eine Pumpe des Impulsfördertyps ist, die einen Ventilkörper (85) in Intervallen um einen bestimmten Drehwinkel (θ) jedesmal dreht, wenn ein Ansteuerimpulssignal an sein Antriebsmittel (n)-mal angelegt wird oder für einen Gesamtwinkel von n x θ zur Forderung von Schmieröl zu dem Zeitpunkt der n-ten Drehung.

17. System nach Anspruch 15 oder 16, **dadurch gekennzeichnet, daß** die Schmiermittelpumpe (82) eine Pumpenkammer (88) umfaßt, definiert durch den Ventilkörper (104), der drehbar und hin- und herbewegbar ist, wobei die Pumpenkammer (88) nacheinander mit einem Flüssigkeitsansaugkanal (81) und einem Flüssigkeitsablieferkanal (84) in Verbindung gebracht wird in Abhängigkeit von der Winkelposition des Ventilkörpers (104).

18. System nach mindestens einem der vorangehenden Ansprüche 15 bis 17, **dadurch gekennzeichnet, daß** der Elektromagnet (251) oder der Schrittmotor (83) die Schmiermittelpumpe (82) in Abhängigkeit von bestimmten Zuständen betreibt, insbesondere in Abhängigkeit von Maschinenlaufbedingungen, speziell in Abhängigkeit von der Maschinengeschwindigkeit.

19. System nach mindestens einem der vorangehenden Ansprüche 15 bis 18, **dadurch gekennzeichnet, daß** die Winkelposition des Ventilkörpers (104) der Schmiermittelpumpe (82) bestimmt wird durch Zählen der Impulsansteuersignale für den Elektromagneten (251) oder den Schrittmotor (83).

20. System nach Anspruch 19, **dadurch gekennzeichnet, daß** eine Vielzahl von Erfassungssensoren (72-76) zum Erfassen einer Vielzahl von Betriebsbedingungen vorgesehen ist, deren Ausgangssignale der Steuereinheit zugeführt werden.

21. System nach mindestens einem der vorangehenden Ansprüche 15 bis 20, **dadurch gekennzeichnet, daß** das Schmieröl und die Schmiermittelpumpe (82) zum Schmieren einer Brennkraftmaschine bestimmt sind, insbesondere einer Zweitaktmaschine direkt an den Schmierstellen.

22. System zum Schmieren einer Maschine (51) wie einer Antriebsmaschine, das besonders ausgelegt ist zum Ausführen des Verfahrens nach mindestens einem der vorangehenden Ansprüche 1 bis 14, welches umfaßt eine über einen festen Bewegungsbereich nur auf eine Bewegung durch den festen Bereich hin zur Forderung einer festgelegten Schmiermittelmenge betreibbare Pumpe (82), einen Antrieb zum Antreiben der Pumpe (82) in Einzelbewegungsschritten, die jeweils kleiner als der festgelegte Bereich sind, Sensormittel (82-76) zum Bestimmen der Maschinenlaufbedingungen, einen Schmiermittelverbrauchbestimmer zum Bestimmen des Schmiermittelverbrauches durch die Maschine (51) aus dem Ausgangssignal der Sensormittel (82-76), und eine Bedienungseinrichtung zum Betätigen des Antriebs, um einen Bewegungsschritt des Antriebs auf eine vorgegebene Menge von Schmiermittelverbrauch hin zu bewirken.

23. System nach mindestens einem der vorangehenden Ansprüche 15 bis 22, **dadurch gekennzeichnet, daß** die Pumpe (82) über den festgelegten Bereich durch einen Saugzyklus, einen Haltezyklus und einen Lieferzyklus betreibbar ist.

24. System nach mindestens der vorangehenden Ansprüche 15 bis 23, **dadurch gekennzeichnet, daß** die Pumpe (82) eine Hubkolbenpumpe enthält.

25. System nach mindestens einem der vorangehenden Ansprüche 15 bis 24, **dadurch gekennzeichnet, daß** der Antrieb einen Schrittmotor (83) umfaßt.

26. System nach mindestens einem der vorangehenden Ansprüche 15 bis 25, **dadurch gekennzeichnet, daß** der Schrittmotor (302) ein Paar Statorwicklungen (304, 305) umfaßt mit voneinander beabstandeten Spulen und bei der die Bedienungseinrichtung selektiv betätigbar ist zum Beaufschlagen jeweiliger Statorwicklungen (304, 305) in Abhängigkeit von vorgegebenen Bedingungen.

27. System nach Anspruch 26, **gekennzeichnet durch** Mittel zum Betreiben der Statorwicklungen (304, 305) für die Einrichtung einer Haltezeit, während der eine Bewegung des Schrittmotors (302) ausgeschlossen ist.

28. System nach Anspruch 27, **dadurch gekennzeichnet, daß** die Zeitlänge, während der die verschiedenen Statorwicklungen (304, 305) beaufschlagt werden, in Abhängigkeit von einem anderen Zustand als dem Maschinenlaufzustand variabel ist.

29. System nach Anspruch 28, **dadurch gekennzeichnet, daß** die andere Bedingung die zur Energieversorgung der Statorwicklungen (304, 305) verfügbare Spannung umfaßt.

30. System nach mindestens einem der vorangehenden Ansprüche 26 bis 29, **dadurch gekennzeichnet, daß** nur eine der Statorwicklungen (304, 305) beaufschlagt wird, falls die Spannung hoher als eine vorbestimmte Große ist.

31. System nach mindestens einem der vorangehenden Ansprüche 29 oder 30, **dadurch gekennzeichnet, daß** keine Haltezeit vorhanden ist, wenn die Spannung unter eine vorgegebene Größe abfällt.

32. System nach mindestens einem der vorangehenden Ansprüche 16 bis 31, **gekennzeichnet durch** einen Zeitgabekomparator zum Vergleichen der Anzahl der bei dem Schrittmotor (302) zum Drehen des Schrittmotors (302) über einen vorgegebenen Bereich erzeugten Impulse und durch einen Positionssensor zum Erfassen der vorgegebenen Position des Schrittmotors (302).

33. System nach Anspruch 32, **gekennzeichnet durch** Betätigen der Bedienungseinrichtung zum Umkehren der Drehrichtung des Schrittmotors (302) für die Position des Schrittmotors (302), nachdem die Anzahl von Impulsen nicht mit der gewünschen Position zusammenfällt.

34. System nach Anspruch 32 oder 33, **dadurch gekennzeichnet, daß** die Bedienungseinrichtung wirksam ist, nach einer vorgegebenen Anzahl von Rückwärtsschritten wieder die Drehung des Schrittmotors (302) in der Vorwärtsrichtung einzuleiten, und weiter Mittel enthält zum Verlangsamen der Drehzahl der Maschine (51), insbesondere einer Antriebsmaschine, wenn auf Wiederaufnahme des vorwärtsantriebs hin die gewünschte Position des Schrittmotors (302) nicht mit der tatsächlichen Position zusammenfällt.

35. System nach mindestens einem der vorangehenden Ansprüche 15 bis 34, **dadurch gekennzeichnet, daß** die Pumpe (82) weiter eine Zuliefersteuerung enthält zum Steuern der Zufuhr von Schmiermittel in einen Pumpenhohlraum (88) während eines Ansaughubes, und zum Verbinden des Pumpenhohlraumes (88) mit der Maschine (51), insbesondere der Antriebsmaschine, während des Lieferhubes.

36. System nach mindestens einem der vorangehenden Ansprüche 15 bis 35, **dadurch gekennzeichnet, daß** die Hubkolbenpumpe (82) einen Pumpenstößel (104) umfaßt, der durch einen Nocken (118) angetrieben wird, der eine geneigten Oberfläche hat und zum Hin- und Herbewegen des Pumpenstößels (104) um eine Achse drehbar ist.

37. System nach Anspruch 36, **dadurch gekennzeichnet, daß** die Bedienungseinrichtung die Schrittbewegung des Schrittmotors (83) so bewirkt, daß die Vollendung eines Schrittes ausgeschlossen wird, wenn der Nocken (118) an einer Schrägfläche sitzt.

38. System nach Anspruch 36 oder 37, **dadurch gekennzeichnet, daß** die Bedienungseinrichtung wirksam ist, eine Haltekraft für den Schrittmotor (83) zu schaffen, falls ein Schritt abgeschlossen ist, wenn der Nocken (118) sich an einer Schrägfläche befindet.

39. System nach mindestens einem der vorangehenden Ansprüche 15 bis 38, **dadurch gekennzeichnet, daß** die Schmiermittelpumpe (82) eine Hubkolbenpumpe ist, die zum Pumpen des Schmiermittels einen sich in einem Zylinder hin- und herbewegenden Pumpenstößel (104) umfaßt, und des weiteren aufweist einen durch eine vorgegebene Winkelposition drehbaren Drehnocken (118) zum Betätigen des Pumpenstößels (104) durch einen vollständigen Betriebshub, den Schrittmotor (83) zum Drehen des Nockens (118) in Winkelschritten, die jeweils kleiner sind als die zum Betreiben des Pumpenstößels (104) durch einen vollständigen Hub erforderliche Winkelgröße, einen Sensor zum Erfassen, wenn der Pumpenstößel (104) sich in einer vorgegebenen Position in seinem Hub befindet, einen Zähler zum Zählen der zum Antrieb des Pumpenstößels (104) zu der Position erforderlichen Schrittzahl des Schrittmotors (83), einen Komparator zum Vergleichen der Anzahl von Schritten, die bewirkt wurden, mit dem Ausgangssignal des Sensors und zum Umkehren der Drehrichtung des Schrittmotors (83), wenn der Zähler und der Ausgang des Positionssensors nicht überein' stimmen.

40. System nach Anspruch 39, **dadurch gekennzeichnet, daß** der Positionssensor die Position des Pumpenstößels (104) bei Vollendung seines Hubes erfaßt.

41. System nach Anspruch 39 oder 40, **dadurch gekennzeichnet, daß** die Anzahl von Betätigungsschritten des Schrittmotors (83) zum Antreiben des Pumpenstößels (104) zu seinem vollständigen Hub eine ganze Zahl ist.

42. Ansteuereinheit für ein System zum Zuführen von Flüssigkeit zu einer Maschine gemäß mindestens einem der vorangehenden Ansprüche 15 bis 41, **gekennzeichnet durch** einen Rotor (303) mit einer Vielzahl von in Umfangsrichtung angeordneten Permanentmagneten, eine erste Statorwicklung (304) mit einer ersten Reihe von Spulen, die unmittelbar neben dem Rotor (303) gesetzt sind, eine zweite Statorwicklung (305) mit einer zweiten Reihe von Spulen, die neben den Rotor (303) gesetzt ist, wobei die Spulen der zweiten Reihe gegenüber den Spulen der ersten Reihe versetzt sind, und eine Steuerung zum Anlegen elektrischen Stroms an die Spulen der Wicklung in Abhängigkeit von einem Zustand.

43. Ansteuereinheit nach Anspruch 42, **dadurch gekennzeichnet, daß** die Bedingung die verfügbare Spannung umfaßt.

44. Ansteuereinheit nach einem der Ansprüche 42 oder 43, **dadurch gekennzeichnet, daß** die Steuerung (47) weiter mindestens eine der Spulen einer der Wicklungen zum Halten des Rotors (303) gegen eine Verdrehung beaufschlagt.

## Revendications

1. Procédé d'amenée d'un lubrifiant à une machine (51), en particulier un moteur à combustion interne (51), comprenant une pompe à lubrifiant (82) commandée par un moteur pas-à-pas, caractérisé en ce que la pompe à lubrifiant (82) peut fonctionner dans une plage fixe de déplacement, afin de fournir une quantité fixe de lubrifiant seulement lors d'un déplacement dans ladite plage fixe au moyen dudit moteur pas-à-pas (83), par des pas incrémentiels de déplacement, chacun inférieur à ladite plage fixe, ladite pompe à lubrifiant (82) comprenant un rotor (303) aimanté en des pôles multiples et le stator (304, 305) ayant des enroulements à phase multiples (θ₁_₄) comandant la rotation du rotor (303) par une excitation alternée à une et deux phases, dans laquelle l'un ou l'autre des enroulements (θ₁) est excité lors d'une excitation à une phase et deux des enroulements (θ_{1,4}) sont simultanément excités lors d'une excitation à deux phases, ledit procédé comprenant les étapes de détermination des états de fonctionnement de la machine, de détermination de la consommation de lubrifiant par ladite machine (51) à partie de ladite détermination, et d'actionnement dudit moteur pas-à-pas (83) afin d'effectuer un déplacement séparé dudit moteur pas-à-pas (83) lors d'une quantité prédéterminée de consommation de lubrifiant.

2. Procédé selon la revendication 1, caractérisé en ce qu'une période d'impulsions d'entraînement selon une vitesse de rotation de consigne du rotor (303) est obtenue, et en ce que la période d'impulsion d'entraînement destinée à une commande d'alimentation en puissance est commandée en trois divisions, consistant en une période d'excitation à une phase, une période d'excitation à deux phases, et une période de maintien d'excitation à une phase, commandant l'amenée de puissance pour la période de maintien d'excitation à une phase vers une valeur nulle ou inférieure à celle d'une période de commande d'excitation.

3. Procédé selon la revendication 2, caractérisé en ce que la période de maintien d'excitation à une phase est commandée à une valeur minimale, nécessaire pour maintenir un opercule du système de lubrification dans une position angulaire spécifiée au moyen dudit moteur pas-à-pas (83).

4. Moteur selon la revendication 2 ou 3, caractérise en ce que la période d'excitation des enroulements de stator (304, 305) est commandée de façon variable de manière que plus la tension de source d'alimentation est élevée, plus les longueurs des périodes de commande d'excitation à une et deux phases sont courtes.

5. Procédé selon au moins l'une des revendications 2 à 4 précédentes, caractérisé en ce que, dans des conditions dans lesquelles la tension de source d'alimentation dépasse une tension de seuil prédéterminée, seule une excitation à une phase et un maintien d'excitation à une phase sont exécutés, tandis que, simultanément, plus la tension de source d'alimentation est élevée, plus les périodes de commande d'excitation à une phase sont courtes, et en ce que, dans des conditions dans lesquelles la tension de source d'alimentation est inférieure à ladite tension de seuil prédéterminée, la commande d'excitation à une et deux phases et le maintien d'excitation en une phase est exécutée, tandis que simultanément, la période de commande d'excitation à deux phases est commandée de façon à être d'autant plus longue que la tension de source d'alimentation est plus faible.

6. Procédé selon au moins l'une des revendications 1 à 5 précédentes, caractérisé en ce que la pompe (82) peut fonctionner durant la plage fixe via un cycle d'aspiration, un cycle d'arrêt momentané et un cycle d'évacuation.

7. Procédé selon au moins l'une des revendications 1 à 6 précédentes, caractérisé en ce que la pompe (82) comprend une pompe à déplacement en va-et-vient et le moteur pas-à-pas (302), et en ce que le moteur pas-à-pas (302) présente un couple d'enroulements de stator (304, 305) ayant des bobines espacées l'une de l'autre et les enroulements de stator (304, 305) sont activés de façon à fonctionner sélectivement, d'après des conditions prédéterminées.

8. Procédé selon la revendication 7, caractérisé par l'étape d'actionnement des enroulements de stator (304, 305) afin d'établir un temps de maintien durant lequel le déplacement du moteur pas-à-pas (302) est empêché.

9. Procédé selon les revendications 7 ou 8, caractérisé en ce que la période de temps durant laquelle les différents enroulements de stator (304, 305) sont activés est modulée en réponse à un état autre que les conditions de fonctionnement de la machine, ledit état comprenant de préférence la tension disponible pour l'alimentation des enroulements de stator (304, 305).

10. Procédé selon la revendication 9, caractérisé en ce qu'un seul des enroulements de stator (304, 305) est activé si la tension est supérieure à une valeur prédéterminée, et en ce qu'il n'existe pas de temps de maintien lorsque la tension tombe au-dessous d'une valeur prédéterminée.

11. Procédé selon la revendication 9 ou 10, caractérisé par l'étape de comparaison entre le nombre d'impulsions produites sur le moteur pas-à-pas (302), afin de faire tourner le moteur pas-à-pas (302) dans la plage prédéterminée, et une position prédéterminée du moteur pas-à-pas (302).

12. Procédé selon la revendication 11, caractérisé par les étapes supplémentaires d'inversion du sens de rotation du moteur pas-à-pas (302) si, après un nombre prédéterminé d'impulsions, la position du moteur pas-à-pas (302) ne coïncide pas avec la position prédéterminée.

13. Procédé selon la revendication 12, caractérisé par les étapes supplémentaires de réintroduction de la rotation du moteur pas-à-pas (302) dans la direction avant après un nombre prédéterminé d'étapes d'inversion et de ralentissement de la vitesse de la machine (54), en particulier du moteur, si la position souhaitée du moteur pas-à-pas (302) ne coïncide pas avec la position réelle lors de la reprise de l'entraînement en marche avant.

14. Procédé selon au moins l'une des revendications 1 à 13 précédentes, caractérisé en ce que la pente (82) comprend en outre une commande d'évacuation servant à commander l'admission d'un lubrifiant à une cavité de pompage (88) durant une course d'aspiration et à établir une communication entre la cavité de pompage (88) et la machine (51), en particulier le moteur, durant la course d'évacuation.

15. Système d'amenée d'un lubrifiant à une machine (51), en particulier un système de lubrification (77) destiné à un moteur à combustion interne (51), comprenant une unité d'amenée de lubrifiant ayant une pompe à lubrifiant (82), en particulier afin de mettre en oeuvre le procédé selon au moins l'une des revendications 1 à 14 précédentes, caractérisé en ce que la pente de lubrifiant (82) comprend un corps de soupape rotatif qui est actionné par un solénoïde (251) entraîné selon un mode impulsionnel ou par un moteur pas-à-pas (83), par un mode pas-à-pas, selon un angle de rotation (θ) prédéterminé, à chaque fois que le moteur pas-à-pas (83) reçoit un signal impulsionnel d'entraînement provenant d'une unité de commande (67), comprenant un moyen de calcul de quantité de liquide et un moyen de calcul de période d'évacuation de liquide en réponse aux conditions de fonctionnement du moteur, afin d'obtenir une quantité de liquide par unité de temps commensurable à des conditions actuelles de fonctionnement de la machine et d'obtenir une durée de consommation de liquide pour 1/n de la quantité d'évacuation pour une course d'évacuation, à partir de la pompe à lubrifiant (83), d'après la quantité de liquide nécessaire par unité de temps, et d'obtenir la période d'évacuation de la pompe à lubrifiant (83) en totalisant le temps de consommation pour n fois.

16. Système selon la revendication 15, caractérisé en ce que la pompe à lubrifiant (82) est de type à application d'impulsions, faisant tourner un corps de soupape (85) à des intervalles donnés autour d'un angle de rotation (θ) spécifique, à chaque fois qu'un signal impulsionnel d'entraînement est appliqué à son moyen d'entraînement pour (n) fois ou selon un angle total n x θ, fournissant de l'huile de lubrification au moment de la n-ième rotation.

17. Système selon la revendication 15 ou 16, caractérisé en ce que la fente de lubrification (82) comprend une chambre de pompe (88) définie par le corps de soupape (104) qui peut tourner et se déplacer en va-et-vient, ladite chambre de pompe (88) étant mise en communication avec un passage d'aspiration de liquide (81) et un passage d'évacuation de liquide (84) successivement en réponse à la position angulaire du corps de soupape (104).

18. Système selon au moins l'une des revendications 15 à 17 précédentes, caractérisé en ce que le solénoïde (251) ou le moteur pas-à-pas (83) actionnent la pompe à lubrifiant (82) en réponse à certaines conditions, spécifiquement en réponse aux conditions de fonctionnement de la machine, spécifiquement en réponse à la vitesse de la machine.

19. Système selon au moins l'une des revendications 15 à 18 précédentes, caractérisé en ce que la position angulaire du corps de soupape (104) de la pompe à lubrifiant (82) est déterminée par un comptage des signaux impulsionnels d'entraînement vers le solénoïde (251) ou le moteur pas-à-pas (83).

20. Système selon la revendication 19, caractérisé en ce qu'une pluralité de capteurs de mesure (72 à 76) servant à détecter des conditions de fonctionnement sont prévus, leur signal de sortie étant amené à l'unité de commande.

21. Système selon au moins l'une des revendications 15 à 20 précédentes, caractérisé en ce que l'huile de lubrification et la pompe de lubrification (82) servent à lubrifier un moteur à combustion interne, spécifiquement un moteur à deux temps directement aux points à lubrifier .

22. Système de lubrification d'une machine (51), tel qu'un moteur, adapté en particulier afin de mettre en oeuvre le procédé selon au moins l'une des revendications 1 à 14 précédentes, comprenant une pompe (82) pouvant fonctionner dans une plage fixe de déplacement afin de fournir une quantité fixe de lubrifiants, seulement lors du déplacement dans ladite plage fixe, un organe d'entraînement servant à entraîner ladite pompe (82) selon des pas incrémentiels de déplacement chacun inférieurs à ladite plage fixe, des moyens formant capteurs (72 à 76) servant à déterminer les conditions de fonctionnement de la machine, un déterminateur de consommation de lubrifiant servant à déterminer la consommation de lubrifiant par ladite machine (51) à partir du signal de sortie desdits moyens formant capteurs (72 à 76), et un opérateur actionnant ledit organe d'entraînement afin de faire effectuer un pas de déplacement par l'organe d'entraînement lors d'une quantité prédéterminée de consommation de lubrifiant.

23. Système selon au moins l'une des revendications 15 à 22 précédentes, caractérisé en ce que la pompe (82) peut fonctionner durant la plage fixe via un cycle d'aspiration, un cycle d'arrêt momentané et un cycle d'évacuation.

24. Système selon au moins l'une des revendications 15 à 23 précédentes, caractérisé en ce que la pompe (82) comprend une pompe en déplacement en va-et-vient.

25. Système selon au moins l'une des revendications 15 à 24 précédentes, caractérisé en ce que l'organe d'entraînement comprend un moteur pas-à-pas (83).

26. Système selon au moins l'une des revendications 15 à 25 précédentes, caractérisé en ce que le moteur pas-à-pas (302) comprend un couple d'enroulements de stator (304, 305) ayant des bobines espacées l'une de l'autre, et dans lequel l'opérateur peut agir sélectivement afin d'activer un enroulement respectif parmi lesdits enroulements de stator (304; 305) d'après des conditions prédéterminées.

27. Système selon la revendication 26, caractérisé par un moyen servant à actionner les enroulements de stator (304, 305) afin d'établir un temps de maintien durant lequel tout déplacement du moteur pas-à-pas (302) est empêché.

28. Système selon la revendication 27, caractérisé en ce que la durée pendant laquelle les différents enroulements de stator (304, 305) sont activés, est modulable en réponse à un état autre que l'état de fonctionnement de la machine.

29. Système selon la revendication 28, caractérisé en ce que ledit autre état comprend la tension disponible pour alimenter les enroulements de stator (304, 305).

30. Système selon au moins l'une des revendications 26 à 29 précédentes, caractérisé en ce qu'un seul des enroulements de stator (304, 305) est activé si la tension dépasse la quantité prédéterminée.

31. Système selon au moins l'une des revendications 29 ou 30 précédentes, caractérisé en ce qu'il n'existe pas de temps de maintien lorsque la tension tombe au-dessous d'une quantité prédéterminée.

32. Système selon au moins l'une des revendications 16 à 31 précédentes, caractérisé par un comparateur de cadencement servant à comparer le nombre d'impulsions produites sur le moteur pas-à-pas (302) afin de faire tourner le moteur pas-à-pas (302) selon un angle prédéterminé, et un capteur de position servant à détecter la position prédéterminée du moteur pas-à-pas (302).

33. Système selon la revendication 32, caractérisé par une commande du moyen d'actionnement, afin d'effectuer une rotation du moteur pas-à-pas (302) en sens inverse, en revenant à la position prise par le moteur pas-à-pas (302), après avoir détecté que le nombre d'impulsions ne coïncidait pas avec la position souhaitée.

34. Système selon la revendication 32 ou 33, caractérisé en ce que l'opérateur sert à reprendre la rotation du moteur pas-à-pas (302) dans la direction de marche avant, après un nombre prédéterminé d'étapes d'inversion, et comprenant en outre un moyen servant à réduire la vitesse de la machine (51), en particulier un moteur, si la position souhaitée du moteur pas-à-pas (302) ne coïncide pas avec la position réelle lors de la reprise de l'entraînement en marche avant.

35. Système selon au moins l'une des revendications 15 à 34 précédentes, caractérisé en ce que la pompe (82) comprend en outre une commande d'évacuation servant à commander l'admission d'un lubrifiant vers une cavité de pompage (88) durant une course d'aspiration et servant en mettre en communication la cavité de pompage (88) avec la machine (51), en particulier un moteur, durant la course d'évacuation.

36. Système selon au moins l'une des revendications 15 à 35 précédentes, caractérisé en ce que la pompe à déplacement en va-et-vient (82) est constituée d'un piston de pompage (104) entraîné par une came (118) ayant une surface inclinée et pouvant tourner autour d'un axe afin de déplacer en va-et-vient ledit piston de pompage (104).

37. Système selon la revendication 36, caractérisé en ce que l'opérateur assure un déplacement pas-à-pas du moteur pas-à-pas (83), afin d'empêcher l'achèvement d'un pas lorsque la came (118) se trouve sur une rampe.

38. Système selon la revendication 36 ou 37, caractérisé en ce que l'opérateur sert à fournir une force de maintien pour le moteur pas-à-pas (83), dans le cas où un pas est achevé lorsque la came (118) se trouve sur une rampe.

39. Système selon au moins l'une des revendications 15 à 38 précédentes, caractérisé en ce que la pompe à lubrifiant (82) est une pompe à déplacement en va-et-vient, constituée d'un piston de pompage (104) déplaçable en va-et-vient dans un cylindre afin de pomper le lubrifiant, d'une came rotative (118) pouvant tourner à travers une position angulaire prédéterminée afin d'actionner ledit piston de pompage (104) selon une course complète de fonctionnement, du moteur pas-à-pas (83) servant à faire tourner ladite came (118) selon des pas angulaires chacun inférieur à la valeur angulaire nécessaire pour le fonctionnement dudit piston de pompage (104) selon une course complète, d'un capteur servant à détecter le moment où ledit piston de pompage (104) se trouve dans une position prédéterminée lors de sa course, d'un compteur servant à compter le nombre de pas dudit moteur pas-à-pas (83) nécessaires pour entraîner ledit piston de pompage (104) vers la dite position, d'un comparateur servant à comparer le moment où le nombre de pas a été effectué et le signal de sortie dudit capteur et servant à inverser le sens de rotation dudit moteur pas-à-pas (83) lorsque ledit compteur et le signal de sortie du capteur de position ne coïncident pas.

40. Système selon la revendication 39, caractérisé en ce que le capteur de position détecte la position du piston de pompage (104) à la fin de sa course.

41. Système selon la revendication 39 ou 40, caractérisé en ce que le nombre d'étapes de fonctionnement du moteur pas-à-pas (83) afin d'entraîner le piston de pompage (104) vers sa course complète est un nombre entier.

42. Unité d'entraînement pour un système servant à fournir un liquide à une machine selon au moins l'une des revendications 15 à 41 précédentes, caractérisée par un rotor (303) ayant une pluralité d'aimants permanents disposés circonférentiellement, un premier enroulement de stator (304) ayant une première série de bobines juxtaposées audit rotor (303), un deuxième enroulement de stator (305) ayant une deuxième série de bobines juxtaposées audit rotor (303), les bobines de ladite deuxième série étant décalées des bobines de ladite première série, et un organe de commande servant à appliquer une puissance électrique aux bobines desdits enroulements d'après une condition.

43. Unité d'entraînement selon la revendication 42, caractérisée en ce que la condition comprend la tension disponible.

44. Unité d'entraînement selon la revendication 42 ou 43, caractérisée en ce que la commande (67) active en outre au moins l'une des bobines de l'un des enroulements afin d'empêcher le rotor (303) de tourner.
